# EUROPEAN PATENT SPECIFICATION

(11) **EP 4 298 548 B1**
(45) Date of publication and mention of the grant of the patent: **18.12.2024**
(21) Application number: 22714953.1
(22) Date of filing: 28.02.2022
(51) Int. Cl.: G06F 40/30

(54) **INFORMED CONSENSUS DETERMINATION AMONG MULTIPLE DIVERGENT USER OPINIONS**
INFORMIERTE KONSENSBESTIMMUNG ZWISCHEN MEHREREN DIVERGIERENDEN BENUTZERMEINUNGEN
DÉTERMINATION DE CONSENSUS INFORMÉ PARMI DE MULTIPLES OPINIONS D'UTILISATEUR DIVERGENTES

(30) Priority: 26.02.2021 US 202163154628 P
(43) Date of publication of application: 03.01.2024
(73) Proprietor: Deliberati LLC, Park City, Utah 84060 (US)
(72) Inventor: WARDEN, Jonathan Robert, Park City, Utah 84060 (US)
(74) Representative: Marks & Clerk LLP
(86) International application number: PCT/US2022/018134
(87) International publication number: WO 2022/183103

(56) References cited:
- ALEX WONG: "Amazon Book Description Hacks - An Author's Guide to Maximizing Your Book's Rankings and Sales", 21 March 2019 (2019-03-21), pages 30 - 33, XP055927081, Retrieved from the Internet <URL:https://books.google.com/books?id=2BAtEAAAQBAJ> [retrieved on 20220601]
- RAJADESINGAN ASHWIN ET AL: "Identifying Users with Opposing Opinions in Twitter Debates", 1 April 2014, ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 153 - 160, ISBN: 978-3-540-74549-5, XP047217093
- DEOKGUN PARK ET AL: "Supporting Comment Moderators in Identifying High Quality Online News Comments", HUMAN FACTORS IN COMPUTING SYSTEMS, ACM, 2 PENN PLAZA, SUITE 701 NEW YORK NY 10121-0701 USA, 7 May 2016 (2016-05-07), pages 1114 - 1125, XP058257471, ISBN: 978-1-4503-3362-7, DOI: 10.1145/2858036.2858389
- SRITEJA ALLAPARTHI ET AL: "Controversy Detection Using Reactions on Social Media", 2017 IEEE INTERNATIONAL CONFERENCE ON DATA MINING WORKSHOPS (ICDMW), IEEE, 18 November 2017 (2017-11-18), pages 884 - 889, XP033279454, DOI: 10.1109/ICDMW.2017.121
- TUHIN CHAKRABARTY ET AL: "AMPERSAND: Argument Mining for PERSuAsive oNline Discussions", ARXIV.ORG, CORNELL UNIVERSITY LIBRARY, 201 OLIN LIBRARY CORNELL UNIVERSITY ITHACA, NY 14853, 30 April 2020 (2020-04-30), XP081655229
- LU YUE YUELU@TWITTER COM ET AL: "Unsupervised discovery of opposing opinion networks from forum discussions", HUMAN FACTORS IN COMPUTING SYSTEMS, ACM, 2 PENN PLAZA, SUITE 701 NEW YORK NY 10121-0701 USA, 29 October 2012 (2012-10-29), pages 1642 - 1646, XP058601021, ISBN: 978-1-4503-1899-0, DOI: 10.1145/2396761.2398489

## Description

### CROSS-REFERENCE TO RELATED APPLICATIONS

This application claims the benefit of U.S. Provisional Application No. 63/154,628, filed February 26, 2021, and titled "INFORMED CONSENSUS DETERMINATION AMONG MULTIPLE DIVERGENT USER OPINIONS".

### TECHNICAL FIELD

This document describes devices, systems, and methods related to determining an informed consensus from among multiple divergent user opinions or preferences, such as through aggregating judgments, to identify quality and reliable assertions or decisions in a polling environment, such as part of a social media systems.

### BACKGROUND

Social media systems, such as social networks like FACEBOOK, TWITTER, and INSTAGRAM, have provided interfaces through which users are able to post content that others are able to effectively endorse, disagree with, or otherwise react to (among a variety of other response options). Such topic-based interactions among users can, in many instances, effectively make posts and the corresponding user reactions polls regarding the accuracy, reliability, and/or quality of the content in the posts. For example, if a user adds a post to a social media site and many users like it, an inference can be drawn that the content of the post is accurate and reliable (e.g., useful or representative of preferences of a group). Determinations of whether a post or other content in a social media system is accurate and reliable has been based on aggregate tallies of user reactions. For example, a post with a large number of likes and positive comments can be viewed as accurate and reliable based on the large positive response to the post by other users.

Social media and other systems have also included the ability to conduct express online polls in which an issue is posed to users, who are presented with an enumerated set of responses to select from. Such express online polls have included the ability for the poll creator, poll participants, and/or other users to view the results of the poll, either while it is ongoing or at the conclusion of a timeframe for the poll. Sometimes online polls have included options for users to comment on or to otherwise react to the outcome of the online polls, such as a comment section associated with the online poll in which users are able to discuss the issue presented on the online poll.

A. Wong: "Amazon Book Description Hacks - An Author's Guide to Maximizing Your Book's Rankings and Sales" discloses that the top positive and the top critical review of a book are shown preferentially to users.

A. Rajadesingan et al: "Identifying Users with Opposing Opinions in Twitter Debates" discloses a method for identifying user opinions in a social media discussion.

D. Park et al: "Supporting Comment Moderators in Identifying High Quality Online News Comments" discloses a method for selecting certain highly relevant posts in a social media application.

A. Sriteja et al: "Controversy Detection Using Reactions on Social Media" discloses an opinion mining method for detecting debates and divergent opinions in an online discussion.

T. Chakrabarty et al: "AMPERSAND: Argument Mining for PERSuAsive oNline Discussions" discloses a method of analyzing a text, or series of texts, for critical passages with important arguments.

Y. Lu et al: "Unsupervised discovery of opposing opinion networks from forum discussions" discloses a method of detecting groups (networks) of social media users with similar opinions.

### SUMMARY

According to an aspect of the present invention, there is provided a method for determining deliberative consensus among a plurality of opinions expressed electronically in an online discussion, as set out in claim 1.

According to another aspect of the present invention, there is provided a system for determining deliberative consensus among a plurality of opinions expressed electronically in an online discussion, as set out in claim 15.

This document is generally directed to technology for determining an informed consensus among multiple different opinions, such as different opinions that are presented with regard to social media posts and/or that are reflected in express online polls. Such an informed consensus can identify a more reliable and accurate (e.g., trustworthy, useful, high quality) opinion, assertion, and/or decision from among a plurality of different opinions, and can do so in a way that is more accurate, reliable, and representative of group preferences than simply relying on an aggregate majority opinion. For example, the disclosed technology provides for directing attention of voters or group members in a majority view to information that may not be reflected by the majority view or comments that can be overlooked-in other words, information that may underlie the basis for minority views. A deliberative or informed consensus can be determined based on a quantity of group members who see the minority comments and information, and change their vote or opinion from the majority view and based on the minority comment. Such a deliberative consensus can be displayed to majority group members and minority group members. Displaying the deliberative consensus can be advantageous to provide voters with a more holistic and informed view of the decision making process. As a result, voters can make more informed opinions and the results of those informed votes can more accurately reflect an informed opinion, viewpoint, and/or preferences.

For example, misinformation and disinformation has run rampant on social media in recent years. Often users are presented with false or otherwise misleading viewpoints, and attempts to correct or sway others through dissenting comments and opinions get drowned out by a majority of uninformed user views that form a center of gravity around the false opinion that, unfortunately, is difficult to modify. For instance, users often vote, share, and/or comment based on how they perceive that others vote, share and/or comment, without considering other views or discussion points, and online discussions can be asynchronous and comments may be overlooked. As a result, dissenting viewpoints which may ultimately be the most accurate, correct, and/or representative of the preferences and interests of the group can be drowned out amongst the sea of uninformed user comments and votes endorsing a flawed or uninformed opinion. The disclosed technology can solve these and/or other problems by helping to focus conversations within an online forum or poll on a critical thread of comments and replies to the critical thread. The deliberative consensus, or aggregate judgment, can be calculated to reflect a consistent and informed judgment of the overall group. This deliberative consensus can then be outputted to members of the group, such as voters in the majority of the group, to provide them with a more informed view of decision making in the online forum or poll. Therefore, the disclosed technology can assist group members in making consistent and informed decisions or judgments that take into consideration varying views within the group.

The disclosed technology can be seamlessly integrated into different social media platforms where users vote on and/or discuss posted content (e.g., FACEBOOK, TWITTER, TWITTER BIRD WATCH, TWITTER SPACES, INSTAGRAM, TIK TOK, ZOOM, CLUBHOUSE, TWITCH, etc.). For example, in audio social networks (e.g., TWITTER SPACES, CLUBHOUSE), users can enter and communicate in audio chat rooms. Users can speak in the chat rooms and/or listen to others speaking in the chat rooms, and may have the ability to respond to comments made by other users in any of a variety of ways (e.g., audio response, emoji reaction, textual response, motion-based response, gesture-based response, facial expression detection, eye tracking). Thus, user reactions to audio-based content can be detected, analyzed, and used to determine a deliberate consensus with regard to the propositions, statements, and/or other assertions in the audio content. For example, a deliberative consensus can be determined based on the comments and reactions in such audio chat rooms, such as identifying a main proposition audibly presented in the chat room, one or more critical comments to that main proposition, and then determining a deliberate consensus among other users who have listened to and/or otherwise viewed both the main proposition and the critical comment. Such features can be extended to other media interfaces for user interaction, such as video interfaces (e.g., video chat room), live streams (e.g., TWITCH, YOUTUBE LIVE), and/or others.

The disclosed technology can be used for any of a variety of purposes, such as for performing fact-checking functionality, particularly with regard to information that is spreading virally on the internet. For example, social media and other content distribution systems have used viral coefficients, which is roughly a ratio of shares/redistributions of content to impressions of the content (e.g., ratio of shares to views), to identify and promote content that is already "going viral" or is likely to "go viral"-meaning promoting content likely to be shared many times over. However, high viral coefficients are not necessarily an indication that the content is accurate or truthful, and oftentimes content that is inaccurate, false, or otherwise misleading can end up having a high viral coefficient. The disclosed technology can be applied to viral coefficient determinations to aid social media companies and other content distribution systems in differentiating between accurate/truthful viral content and misleading/false viral content. For example, one or more critical comments to the viral content (e.g., viral post, viral video, viral news link) can be identified and a group of users who have viewed both the viral content and the responsive critical comment can be identified. The viral coefficient for such a group of informed users (i.e., users who have viewed both the viral content and the critical comment(s)) can be determined and used in any of a variety of ways to distinguish between accurate/truthful viral content and misleading/false viral content. For example, the viral coefficient for the group of informed users can be compared against a viral coefficient for a broader population of users (e.g., all users) and/or a population of users who have only viewed the viral content (not also viewed the critical comment). If the viral coefficient for the group of informed users is lower than viral coefficients for other populations of users (e.g., a threshold level lower, statistically significant amount lower), then the viral content can be determined to likely be inaccurate/false, and corrective actions can be taken, such as reducing the viral coefficient for the content (e.g., reducing viral coefficient to the viral coefficient of the informed group of users), removing the viral content from the social media and/or content distribution systems, and/or taking other corrective actions to slow, stop, or otherwise mitigate the spread of the false and misleading information. However, if the viral coefficient for the group of informed users is similar to, the same as, or greater than the viral coefficient for the broader population, it can indicate that the content is truthful/accurate, which can cause social media and/or other content distribution systems to maintain (and/or increase, in some instances) the viral coefficient for the viral content. Other extensions and/or applications of the deliberative consensus to viral content are also possible.

Particular embodiments described herein include systems and methods for determining a deliberative consensus of a poll. The method can include receiving poll results having a first group and a second group, receiving comments to the poll, identifying, based on reactions to the comments and the poll results, a comment associated with users of the second group as a critical comment, and determining, based on the responses of users who saw or did not see the critical comment, the deliberative consensus of the poll.

In some implementations, the system and method disclosed herein can optionally include one or more of the following features. For example, the reactions to the critical comment can include (i) up votes, (ii) down votes, (iii) likes, (iv) replies, (v) retweets, (vi) reposts, or (vii) inaction. The method can further include determining whether users saw the critical comment based on (i) receiving an indication that the users received a notification with the critical comment or (ii) the users made reactions to the critical comment. Responses to the critical comment can include changing a vote or viewpoint of users of a portion of the first group to a vote or viewpoint of the second group. The poll can be a social media post. The critical comment can be a reaction to the poll that is opposite a viewpoint of the first group.

The method can also include identifying the critical comment based on textual sentiment analysis. The method can include outputting the critical comment, the deliberative consensus, and an overall poll result to users of the first group and users of the second group. The overall poll result can be a numeric ratio of a quantity of users in the first group to a quantity of users in the second group. Outputting the critical comment can include displaying the critical comment at a top portion of the poll. Outputting the critical comment can include displaying a thread of comments that include the critical comment, the comments in the thread being ranked from a high criticalness score to a low criticalness score. The high criticalness score can be assigned to a comment of the comments in the thread having the most reactions and the low criticalness score can be assigned to a comment of the comments in the thread having the least reactions.

The deliberative consensus can also be a ratio of (i) users who reacted in agreement with the critical comment to (ii) a primary proposition of the poll, wherein the primary proposition of the poll is associated with a viewpoint of the first group. The thread of comments can further include a last comment in the thread before the critical comment. The thread of comments can include one or more comments that are relevant to the critical comment.

As another example, the method can further include transmitting, to a portion of users of the first group, a notification with the critical comment, receiving, from the portion of users of the first group, indications of responses to the notification, and determining, based on the indications of responses to the notification, the deliberative consensus. The notification can prompt the portion of users of the first group to view most recent comments in a comment thread, wherein the most recent comments in the comment thread can lead up to the critical comment. The notification can include a link that directs the portion of users of the first group to the critical comment in the poll. The notification can also be an email that includes the critical comment. Moreover, the critical comment can be ranked higher than other comments in the thread of comments, wherein the other comments can be less critical than the critical comment.

In addition to the embodiments of the attached claims and the embodiments described above, the following numbered embodiments are also innovative. Embodiment 1 is a method for determining deliberative consensus among a plurality of opinions expressed electronically in an online discussion, the method comprising: receiving, at a computer system, user feedback data for at least a first group of users and a second group of users, wherein the user feedback data identifies a first opinion expressed in the online discussion by the first group of users and a second opinion expressed in the online discussion by the second group of users, wherein the first opinion and the second opinion relate to a topic, and the first opinion is different from the second opinion; receiving, at the computer system, comment data identifying comments posted to the online discussion in response to the first opinion and the second opinion expressed in the online discussion; identifying, by the computer system and based on reactions to the comments and the user feedback data, a critical comment from among the comments that support the second opinion, wherein the first opinion represents a majority view held by the first group and the second opinion represents a minority view in the online discussion held by the second group; transmitting, by the computer system and to a portion of computing devices associated with users of a third group, a notification with the critical comment, wherein transmitting the notification causes the critical comment to be presented on the portion of the computing devices and for the portion of the computing devices to receive responses to the critical comment from the users of the third group; receiving, by the computer system and from the portion of the computing devices, indications of the responses to the notification; determining, by the computer system and based on the indications of responses to the notification, a deliberative consensus opinion based, at least in part, on the responses to the notification regarding the critical comment from the portion of the computing devices associated with the users of the third group, wherein the deliberative consensus opinion is a numeric value associated with at least one of the first opinion and the second opinion for the topic, and transmitting, by the computer system and to at least one of the computing devices of users in the first group, the second group, and the third group, the deliberative consensus opinion of the online discussion.

Embodiment 2 is the method of embodiment 1, wherein: the online discussion is an online forum or a social media platform, the first opinion is expressed in relation to a post regarding the topic by the first computing devices associated with the first group of users via the online forum, wherein the first opinion is at least one of a (i) comment, (ii) up vote, (iii) like, (iv) the post, (v) a tag, (vi) a share action, (vii) a repost action, (viii) a micro-payment, and (ix) a user selection, and the second opinion is expressed in relation to the post regarding the topic by second computing devices associated with the second group of users via the online forum, wherein the second opinion is at least one of a (i) down vote, (ii) comment, (iii) inaction, (iv) a flag, (v) a tag, and (vi) a dislike, wherein the user feedback data is received from a computer system hosting the online discussion.

Embodiment 3 is the method of any one of embodiments 1 through 2, wherein the notification comprises at least one of (i) a message presented at a top portion of a feed provided by the online forum or the social media platform, (ii) a push notification directing the users of the third group to a mobile application provided at the portion of the computing devices, (iii) an email notification, (iv) a badge notification for the mobile application or a web application provided at the portion of the computing devices, and (v) the critical comment presented immediately below or immediately above the post in the feed provided by the online forum or the social media platform.

Embodiment 4 is the method of any one of embodiments 1 through 3, further comprising sorting, by the computer system and based on the deliberative consensus opinion, posts presented in the online forum or the social media platform to users of at least one of the first group, the second group, and the third group, wherein posts having a higher numeric value are presented above other posts having a lower numeric value in the online forum or the social media platform.

Embodiment 5 is the method of any one of embodiments 1 through 4, further comprising filtering, by the computer system and based on the deliberative consensus opinion, posts presented in the online forum or the social media platform to users of at least one of the first group, the second group, and the third group such that posts having a numeric value that satisfies a threshold condition are presented and posts having a numeric value that does not satisfy the threshold condition are not presented.

Embodiment 6 is the method of any one of embodiments 1 through 5, further comprising: identifying, by the computer system, a subset of users from at least one of the first group, the second group, and the third group who saw viral content and the critical comment, the critical comment being responsive to the viral content; determining, by the computer system, a first viral coefficient for the identified subset of users; determining, by the computer system, a second viral coefficient for users from at least one of the first group, the second group, and the third group who saw the viral content but did not see the critical comment; determining, by the computer system, whether the first viral coefficient is less than the second viral coefficient; identifying, by the computer system and based on a determination that the first viral coefficient is less than the second viral coefficient, the viral content as containing inaccurate or false information, and performing, by the computer system, a corrective action in response to the viral content containing inaccurate or false information, wherein the first viral coefficient is a value associated with a first deliberative consensus opinion and the second viral coefficient is a value associated with a pre-deliberative consensus opinion.

Embodiment 7 is the method of any one of embodiments 1 through 6, wherein performing, by the computer system, the corrective action comprises lowering the second viral coefficient to a value of the first viral coefficient.

Embodiment 8 is the method of any one of embodiments 1 through 7, wherein performing, by the computer system, the corrective action comprises removing the viral content from the online discussion.

Embodiment 9 is the method of any one of embodiments 1 through 8, wherein performing, by the computer system, the corrective action comprises sorting content presented in the online discussion such that the viral content is presented below other content.

Embodiment 10 is the method of any one of embodiments 1 through 9, further comprising: identifying, by the computer system and based on a determination that the first viral coefficient is greater than or equal to the second viral coefficient, the viral content as containing accurate or true information; and raising, by the computer system, the second viral coefficient in response to the viral content containing accurate or true information.

Embodiment 11 is the method of any one of embodiments 1 through 10, wherein: the online discussion is a poll, the first opinion is expressed in relation to the post regarding the topic as a first vote in the poll at the first computing devices associated with the first group of users, and the second opinion is expressed in relation to the poll regarding the topic as a second vote in the poll at second computing devices associated with the second group of users.

Embodiment 12 is the method of any one of embodiments 1 through 11, wherein in response to transmitting the notification to the portion of computing devices, presenting, at the portion of computing devices the critical comment caused at least a threshold adoption of the second opinion by a subset of users in at least one of the second group and the third group based on the subset of users in the at least one of the second group and the third group seeing the critical comment and then adopting the second opinion as a result of seeing the critical comment.

Embodiment 13 is the method of any one of embodiments 1 through 12, further comprising selecting, by the computer system, the deliberative consensus opinion using Distributed Bayesian Reasoning and based at least in part on the at least threshold adoption of the second opinion.

Embodiment 14 is the method of any one of embodiments 1 through 13, wherein identifying, by the computer system, the critical comment from among the comments that support the second opinion comprises identifying a most up voted comment among the comments.

Embodiment 15 is the method of any one of embodiments 1 through 14, wherein identifying, by the computer system, the critical comment from among the comments that support the second opinion comprises: identifying, as the critical comment, a comment that causes a biggest change in the deliberative consensus opinion after the comment is seen by a subset of users in at least one of the second group and the third group; determining a first probability that a user in the subset of users in at least one of the second group and the third group would believe the comment and take an action before seeing the comment; determining a second probability that the user believes the comment and takes an action in response to seeing the comment; and determining a probability that a fully-informed user in the subset of users in at least one of the second group and the third group would be convinced by the comment and take an action in response to seeing the comment based on identifying a shift between the first probability and the second probability.

Embodiment 16 is the method of any one of embodiments 1 through 15, wherein the responses to the notification include a subset of the first users in the first group switching from the first opinion to the second opinion, wherein the subset of the first users in the first group join the second group of users.

Embodiment 17 is the method of any one of embodiments 1 through 16, wherein the responses to the notification include a subset of the first users in the first group performing an affirmative action to confirm their support of the first opinion.

Embodiment 18 is the method of any one of embodiments 1 through 17, wherein the responses to the notification include indications that a subset of the first users in the first group did not perform an action in response to receiving the notification.

Embodiment 19 is the method of any one of embodiments 1 through 18, wherein the deliberative consensus opinion is a percent of users from the first group, the second group, and the third group that are (i) exposed to the critical comment and (ii) accept the first opinion or the second opinion after being exposed to the critical comment.

Embodiment 20 is the method of any one of embodiments 1 through 19, wherein the notification includes a subset of comments in a comment thread associated with the online discussion, wherein the subset of comments support the critical comment and provide context around the critical comment.

Embodiment 21 is the method of any one of embodiments 1 through 20, wherein the critical comment is identified, by the computer system, as a comment having a highest difference based on a formula of *log(P(agree*|*seen comment))* - *log(P(agree* |*not seen comment)).*

Embodiment 22 is the method of any one of embodiments 1 through 21, wherein the third group includes at least one of a user in the first group and a user in the second group.

Embodiment 23 is the method of any one of embodiments 1 through 22, wherein the third group includes users who have not provided user feedback data identifying the first opinion or the second opinion.

Embodiment 24 is the method of any one of embodiments 1 through 23, wherein the third group includes users who are different from the users in at least one of the first group and the second group.

Embodiment 25 is the method of any one of embodiments 1 through 24, further comprising: identifying, by the computer system, a comment in disagreement with the critical comment, the critical comment being a previous critical comment; and recursively performing, by the computer system, the receiving, the selecting, and the transmitting steps with the comment in disagreement with the previous critical comment being selected as the new critical comment, wherein the new critical comment is the comment in disagreement with the previous critical comment, the first opinion is in agreement with the previous critical comment, and the second opinion is in disagreement with the previous critical comment.

Embodiment 26 is the method of any one of embodiments 1 through 25, wherein: the online discussion is a governance platform, the first opinion is expressed in relation to a decision to be made regarding the topic by the first computing devices associated with the first group of users via the governance platform, wherein the first opinion is at least one of (i) a comment and (ii) a vote, and the second opinion is expressed in relation to the decision to be made regarding the topic by second computing devices associated with the second group of users via the governance platform, wherein the second opinion is at least one of (i) a comment in opposition of the first opinion, (ii) a vote in opposition of the first opinion, and (iii) an inaction.

Embodiment 27 is the method of any one of embodiments 1 through 26, wherein the governance platform is a decentralized autonomous organization (DAO).

Embodiment 28 is a system for determining deliberative consensus among a plurality of opinions expressed electronically in an online discussion, the system comprising: an online discussion system configured to host online discussions, wherein the online discussions include at least one of an online forum, a social media platform, and a poll; user devices running client applications that interact with the online discussion system to present the online discussions to users of the user devices; and a computer system in communication with the user devices, the computer system being configured to determine a deliberative consensus opinion among a plurality of opinions expressed by the users of the user devices in an online discussion hosted by the online discussion system, wherein the computer system is configured to perform operations comprising: receiving, from the user devices, user feedback data for at least a first group of users and a second group of users, wherein the user feedback data identifies a first opinion expressed in the online discussion by the first group of users and a second opinion expressed in the online discussion by the second group of users, wherein the first opinion and the second opinion relate to a topic, and the first opinion is different from the second opinion, receiving, from the user devices, comment data identifying comments posted to the online discussion in response to the first opinion and the second opinion expressed in the online discussion; identifying, based on reactions to the comments and the user feedback data, a critical comment from among the comments that support the second opinion, wherein the first opinion represents a majority view held by the first group and the second opinion represents a minority view in the online discussion held by the second group; transmitting, to a portion of user devices associated with users of a third group, a notification with the critical comment, wherein transmitting the notification causes the critical comment to be presented on the portion of the user devices and for the portion of the user devices to receive responses to the critical comment from the users of the third group; receiving, from the portion of the user devices, indications of the responses to the notification; determining, based on the indications of responses to the notification, a deliberative consensus opinion based, at least in part, on the responses to the notification regarding the critical comment from the portion of the user devices associated with the users of the third group, wherein the deliberative consensus opinion is a numeric value associated with at least one of the first opinion and the second opinion for the topic; and transmitting, to at least one of the user devices of users in the first group, the second group, and the third group, the deliberative consensus opinion of the online discussion.

The system of embodiment 28 can perform the method of any one of the embodiments 1 through 27.

Embodiment 29 is a computing device used by a user to interact in an online discussion, the computing device being configured to: receive, from an online discussion system, an online discussion, wherein the online discussion system is configured to host online discussions, the online discussions include at least one of an online forum, a social media platform, and a poll; express a first opinion in the online discussion; transmit the first opinion to a computer system, wherein the computer system is configured to add the first opinion to user feedback data for at least a first group of users and a second group of users, the user feedback results data identifying the first opinion expressed in the online discussion by the first group of users and a second opinion expressed in the online discussion by the second group of users, wherein the first group of users represents a majority view and the second group of users represents a minority view in the online discussion; receive, from the computer system, a notification with a critical comment, wherein the critical comment is identified, by the computer system, from among comments posted to the online discussion in response to the first opinion and the second opinion expressed in the online discussion; transmit, to the computer system, an indication of a response to the notification, wherein the response comprises an action to switch from expressing the first opinion in the online discussion to adopting the second opinion based on viewing the critical comment, and receive, from the computer system, a deliberative consensus opinion of the online discussion, wherein the deliberative consensus opinion is determined, by the computer system and based on the indication of the response to the notification, the deliberative consensus opinion being a numeric value associated with at least one of the first opinion and the second opinion for the topic.

The computing device of embodiment 29 can perform the method of any one of the embodiments 1 through 27.

The devices, system, and techniques described herein may provide one or more of the following advantages. For example, the disclosed technology can provide for assisting a group of people to make informed decisions and/or votes in an online social platform. Discussion can help a group make better judgments and be more democratic. Discussion is how knowledge and ideas can spread among a diverse group of users. In online forums, it can be more challenging to have constructive decisions than during in-person conversations. Thus, in online forums, voices can be drowned out and/or critical or important comments may be ignored. The disclosed technology can provide for bringing critical comments to light, thereby informing group members about different views that may impact or sway their vote or opinion. Credible, useful, and/or uplifting content and discussions can be promoted such that lower quality comments that may dominate social media with the loudest voices may not automatically become the majority voice.

The disclosed technology can also provide for ensuring that group members are not censored merely because they do not share a majority voice, comment, or vote. The described technology can facilitate fair and informed judgment as well as efficient conversations, sparing limited attention of users by keeping conversation focused on a critical thread and prompting people to respond just enough to determine a deliberative consensus. By identifying a majority voice, identifying comments that are critical of the majority voice, and providing such critical comments to people in the majority voice, the people in the majority voice can develop a more holistic understanding of different voices to then make a more informed decision that may be contra to the majority voice. One or more other techniques for encouraging honest feedback can be used, for example, by making votes and other reactions anonymous. Advanced cryptographic techniques, such as zero-knowledge proofs, can also be used to ensure anonymity. In some implementations, methods such as Peer Prediction and the Bayesian Truth Serum Mechanism can be used to reward users (e.g., with reputation points) for providing honest feedback, votes, and/or reactions, even if the users believe their opinion(s) differs from a majority view.

Moreover, the disclosed technology can provoke group members to engage in discussion on online forums. The disclosed technology can gently remind or notify majority group members to view and/or respond to critical comments until key points raised in the critical thread or critical comment(s) are addressed and/or reflected in the group voting.

As another example, the disclosed technology can provide for identifying minority or critical comments that may be overlooked during a discussion. Popularity according to likes and/or votes may only measure users' initial reactions to posts, not their collective judgment about the posts' credibility or quality. A coherent judgment of the group may emerge when there is discussion and critical, minority comments are brought to light. By identifying comments that are made by users who voted in a minority or didn't vote at all, or otherwise are critical of the majority view, the comments can be deemed critical and shared with group members who voted in the majority. The group members who voted in the majority can then change their vote based on seeing the critical comments. As a result, group members can make more informed and fair votes or decisions rather than being swayed by group think or majority votes. Group members who votes in the majority can also respond to critical comments with counter-arguments or reasons justifying their original votes. The disclosed technology can promote constructive conversations by promoting content that can be based on what users judge to be accurate, interesting, and/or useful, not just popular and/or engaging. The disclosed technology can also provide for making users feel comfortable to disagree and engage in group discussion by sharing their viewpoints.

As yet another example, the disclosed technology can apply to different online social platforms, not only formal polls or voting environments. Many social platforms and/or websites involve voting on posts (e.g., such as upvotes or downvotes) as well as voting on comments in threads that correspond to posts. A deliberative consensus can be calculated for such types of posts such that attention can be directed to critical comments regardless of the type of online platform. Providing users of social platforms with a deliberative consensus can assist those users in making more informed decisions and promoting quality content and discussion regardless of the type of online platform.

As mentioned, the disclosed technology can be seamlessly integrated into existing social platforms such that a deliberative consensus can appear almost indistinguishable from threaded conversations and feed layouts already displayed on social platforms. The disclosed technology can provide an additional promotion of critical comments and an improved method for aggregating votes. Since the disclosed technology can be integrated into existing social platforms, the disclosed technology can provide value to a user's feed rather than just manipulate the feed for the benefit of the platform. In other words, using the disclosed technology, a selection, order, and/or formatting of content in user feeds can be adjusted to engage the user in discussions around critical comments. The user can be more engaged and discover more useful discussions while still being able to customize filters applied to their feeds as well as what information is displayed on their feeds.

The details of one or more implementations are set forth in the accompanying drawings and the description below. Other features and advantages will be apparent from the description and drawings, and from the claims.

### BRIEF DESCRIPTION OF THE DRANVINGS

FIG. 1A is a conceptual diagram for determining a deliberative consensus in an online polling environment.
FIG. 1B depicts determining the deliberative consensus of FIG. 1A.
FIG. 2 is a system diagram of components used in determining a deliberative consensus.
FIG. 3 is a flowchart of a process for determining a deliberative consensus.
FIG. 4 is a flowchart of a process for determining a critical comment to a poll.
FIGS. 5A-C depict an example use case of deliberative consensus in an online polling environment.
FIGS. 6A-B depict an example use case of deliberative consensus in an online social media platform.
FIGS. 7A-B depict another example use case of deliberative consensus in an online social media platform.

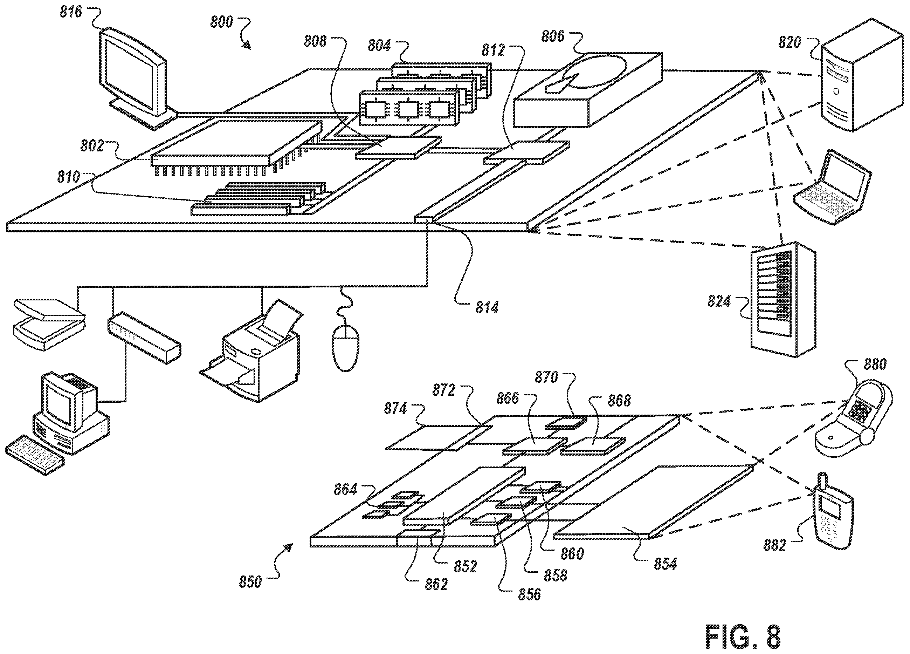

FIG. 8 is a schematic diagram that shows an example of a computing device and a mobile computing device.

Like reference symbols in the various drawings indicate like elements.

### DETAILED DESCRIPTION OF ILLUSTRATIVE EMBODIMENTS

This document generally relates to technology for aggregating judgments and preferences to identify quality content and/or group decisions in a polling environment. Groups of people can make better decisions after discussions. In online discussions or forums, however, there may be limited discussion and/or users' comments may not be seen by everyone in the group. Minority comments (e.g., comments that are negative or associated with dislikes or down votes or otherwise not in agreement with whatever a majority view is) can be identified as critical comments and therefore brought to attention of group members in a majority view. The group members of the majority view can be notified of the critical comments and can change their comments and/or views in favor of the critical comments. Thus, the disclosed technology can identify comments that may represent reasons that one or more users in a minority disagree with the majority view or vote. The disclosed technology can then direct attention of users in the majority to that comment. A deliberative consensus can be determined based on how many members of the majority view changed their vote/view in response to seeing the critical comment. The deliberative consensus can provide a more holistic view of group viewpoints in comparison to just an overall poll result.

In some implementations, critical comments can be identified based on determining that the user who made the comment was in a minority vote in the poll (e.g., they did not vote the same as a majority of users in the group). The disclosed technology can identify how many users voted in a minority and how many users voted in a majority. Any comments associated with users who voted in the minority can be identified as critical comments. If there are multiple comments identified as critical comments, a critical comment with a higher amount or ratio of votes can be deemed the critical comment for the poll. One or more other techniques can be used to rank the critical comments based on their support, reactions, and/or criticalness to identify a most critical comment.

In some implementations, the critical comment can be identified as a comment that is most convincing to a majority of users, regardless of whether the majority of users are associated with the majority vote or the minority vote in an online discussion. For example, what was once the minority vote may now be a majority vote because a certain critical comment changed the minds of a majority of users engaging in the online discussion. That critical comment can remain the critical comment for the online discussion, assuming there is no comment associated with the other vote that is convincing.

In other implementations, negative attitudes or critical comments can be inferred based on history of a user's comments, votes, or likes/dislikes. A user who downvotes a post and then comments may raise a probability that they are making a critical comment. Moreover, a user who does not like a post but comments can raise an inference that they are in a minority view (a viewpoint that is different than the viewpoint of the post). Relationships between users who comment and users who post can also be analyzed to determine whether a comment is friendly or an attack. Textual sentiment analysis and/or deep learning techniques can be used to infer relationships and intent from comments, likes, dislikes, votes, and/or lack of response to a poll or other online post. In some settings, such as a smaller group of users, there may only be one comment to the poll or post, which can be easier to identify as the critical comment, especially if the user who made the comment did not vote in the majority.

If a user responds to a critical comment and users change their votes to be in favor of the critical comment (e.g., they change their majority vote to vote for the minority view), the disclosed technology can recursively update the critical comment for the poll. In other words, the critical comment can dynamically change as users in the majority change their votes in response to seeing the critical comment. This can indicate that the users were influenced by the comment and that by seeing the critical comment, they made a more informed decision than when they did not see the critical comment. The disclosed technology can focus discussion in the poll or post on whatever comment is critical at a given time. Whenever replies are made to the critical comment, those replies can be analyzed and compared to determine whether they are positive or negative. In some implementations, the critical comment can be updated to one of those replies. The updated critical comment can then be provided to users in the minority view, such as the user who made the first critical comment. The disclosed process can be repeated any number of times, resulting in a critical thread having critical comments, where each critical comment can be a response to a previous critical comment. Thus, each comment in a critical thread can represent the comment that was the most convincing and/or informative at that point in the thread (e.g., conversation). This is advantageous to provide for back and forth discussion between the different viewpoints such that the group can reach an informed and deliberative consensus.

In some implementations, and as described herein, users can be notified of the critical comment. For example, users in the majority view can be notified of the critical comment. Subsequent critical comments can be outputted to users in either or both of the majority and minority views in order to promote engaging discussion or conversation. A link and/or a critical thread can be displayed to the users. The critical thread can include the critical comment and optionally conversation resulting from the critical comment. The critical thread can also include a comment thread leading up to the critical comment. Moreover, the critical thread can include a last N number of comments leading up to the critical comment. In other implementations, when the users view the poll, they can be prompted with a notification that nudges the users to scroll to the bottom of the poll thread to view the last critical comment that was posted and responded to. In some implementations, where the critical comment is displayed to the users, a tail end of the critical thread (e.g., the most recent critical comment(s)) can be displayed along with or in lieu of overall poll results. Therefore, users may not have to scroll through the entire poll thread to see where or why group members changed their votes. Group members can be directed to focus on end results or a resolution of discussion in the poll rather than being bogged down with comments and notifications that may have no impact on the group consensus or votes.

As described herein, the disclosed technology can be applied to different online forums, software, and/or social platforms. Some online environments include team software, civic forms for cities and/or neighborhoods, websites, mobile applications, news aggregators, comments on blogs and media websites, and/or other social media platforms or polling/voting platforms. Online environments can also include online dispute resolution systems, governance platforms (e.g., decentralized autonomous organizations, DAOs, in environments such as Blockchain), and fact-checking tools. The disclosed technology can be a standalone software or application. The disclosed technology can also be a plugin for forum software or applications. The disclosed technology can be integrated into a social network. Posts in a social network can be treated as polls and likes, comments, and/or silence in response to a post can be analyzed to determine a critical comment and deliberative consensus, as described herein. For example, a post that gets a lot of likes may not be the first to show on a user's feed. Instead, a post that received a lot of likes after a conversation (e.g., comments) took place in the post can be deemed quality content and therefore raised to a top of the user's feed. Thus, the disclosed technology can provide for drawing attention to critical comments by putting those critical comments higher up in a user's feed.

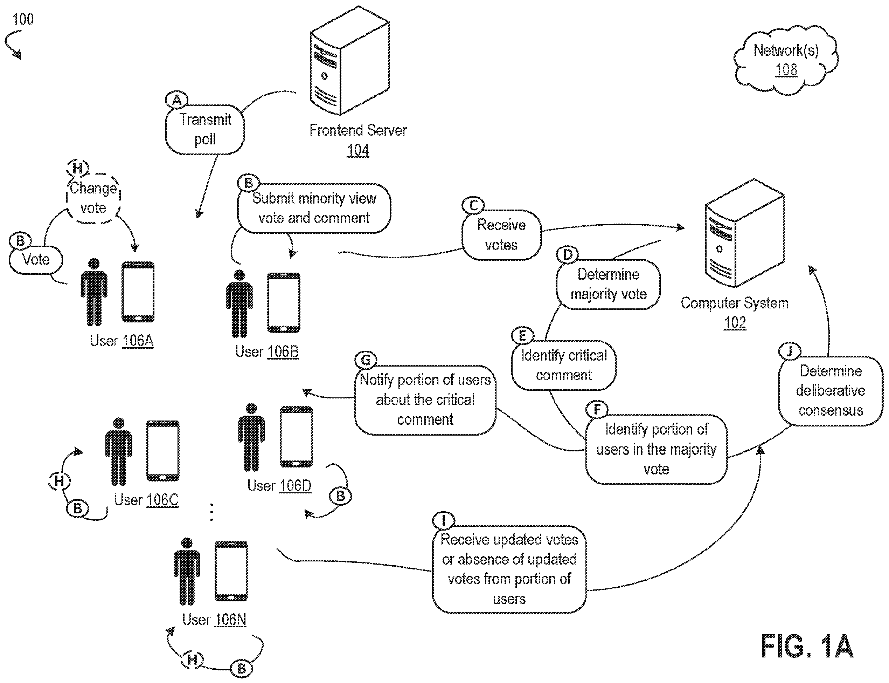

Referring to the figures, FIG. 1A is a conceptual diagram for determining a deliberative consensus in an online polling environment or system 100. The online polling environment, as described herein, can be any type of online discussion, including but not limited to a poll, vote, post, online forum, tweet, etc. A computer system 102 can communicate with a frontend server 104 (e.g., social media server) via network(s) 108. Communication can be wired and/or wireless. The frontend server 104 can be configured to provide a poll or other online social platform to user devices 106A-N. The computer system 102 can be configured to identify critical comments in a poll or other online platform presented to the user devices106A-N. The computer system 102 can also be configured to determine a deliberative consensus for the group of user devices 106A-N. The user devices 106A-N can be operated by individuals or people that use the social platform provided by the frontend server 104. As depicted in FIG. 1A, the user devices 106A-N can be associated with people in one group relating to one poll. In other implementations, the user devices 106A-N can be associated with people in multiple groups relating to one or more different polls. In yet other implementations, one or more of the user devices 106A-N can be associated with individuals who are receiving multiple different polls.

The frontend server 104 can transmit a poll to the user devices 106A-N (A). As mentioned, the poll can be transmitted to any number of the user devices 106A-N. For example, the user devices 106A-N can all be part of a group intended to receive the poll. In other implementations, the poll can be transmitted to only the user devices 106A-N part of a group that is intended to receive the poll. In yet other implementations, the poll can be transmitted to all the user devices 106A-N. For example, the poll can be a post that appears on a social media platform feed, such as a TWEET or INSTAGRAM photo post.

Once the user devices 106A-N receive the poll, users at the devices 106A-N can vote on the poll (B). For example, the users can like the poll, upvote, downvote, comment, and/or do nothing in response to receiving the poll. As depicted in FIG. 1A, a user at the user device 106B submitted a minority view vote and comment (B). In other words, the user at the user device 106B can be one user expressing a view that may not align with the majority response to the poll. For example, a majority of users at the user devices 106A-N can like or upvote the poll but the user at the user device 106B may be the only user in the group that neither liked nor upvoted the poll. Therefore, the user at the user device 106B may be in the minority view.

The computer system 102 can receive the votes from the user devices 106A-N (C). As described herein, the computer system 102 can determine a majority vote (D). The majority vote can be a count or ratio of a number of likes or upvotes in response to the poll over a total number of reactions to the poll. In other implementations, the majority vote can be a ratio of a number of likes or upvotes in response to the poll over a total number of users that received and/or saw the poll at the user devices 106A-N. In yet other implementations, the majority vote can be a count or ratio of a response that a majority of users made in comparison to the total number of users who received and/or saw the poll. For example, the majority vote can be a downvote or dislike of the poll. The majority vote can also be an upvote or like of the poll. In other implementations, users can choose to "agree" or "disagree" with an assertion made in the poll (e.g., "we should take Friday off" or "Tomatoes cause cancer."). In some implementations, such as a multiple choice poll, the majority vote can be a choice that received the most selections by the users in the group. In yet other implementations, such as a ranked-choice poll, the majority vote can be a choice output by a social choice function. In some implementations, and as described further below, the computer system 102 can weigh the received votes from the user devices 106A-N, where weighting can be based on reputation assigned to users associated with the user devices 106A-N.

Once the majority vote is determined (D), one or more critical comments can be identified (E). For example, the computer system 102 can receive comments made in response to the poll along with the poll votes in C. The computer system 102 can identify which users made the comments and determine whether those users are part. of the majority vote. If the users who commented did not vote in the majority view, then their comments can be identified as critical comments. As mentioned throughout, critical comments are those that are not represented in the majority view. In some implementations, as described herein, the critical comments can be identified as comments that are the most convincing to a majority of users engaging in the poll (e.g., a comment that, as a result of being seen by the majority of users, causes the majority of users to change their vote, upvote, like, comment, share, etc.).

A portion of users in the majority vote can then be identified (F). After all, once the critical comment is identified, a way to promote discussion over the poll can be to provide the critical comment to members of the group who may not have seen the critical comment and/or may have voted in the majority view without making an informed decision. Identifying a portion of the users at the user devices 106A-N who are in the majority view can be beneficial to share the critical comment with them and create a more informed voting environment. In some implementations, the portion of users in the majority can be all the users in the majority view. In other implementations, the portion of users in the majority can be less than all the users in the majority view.

The identified portion of users in the majority vote can be notified of the critical comment (G). As described herein, the user devices 106A-N of users in the majority vote can receive a notification indicating that a critical comment was added to a thread for the poll. The notification can link or direct the users to the critical comment. Users' attention can otherwise be directed to the critical comment via an email, attaching the critical comment to the poll whenever the poll is shared, and promoting the critical comment in a social media feed (e.g. if critical comment is a TWEET, that comment can be placed closer to the top of more people's TWITTER feeds).

The notification can contain all or part of the critical comment. Furthermore, as described herein, the notification can also include all or part of the critical comment thread leading up to the critical comment. The notification can also prompt the portion of users in the majority vote to engage in conversation started by the critical thread, thereby promoting discussion and more informed decision making.

One or more of the users at the user devices 106A-N can optionally change their vote based on the notification of the critical comment (H). For example, as depicted, users at devices 106A, C, and N can change their votes. Changing votes can include unliking the poll, downvoting, retweeting, reposting, replying, removing a comment, adding a comment in response to the critical comment, liking the critical comment, or any other action that is opposite the user's original vote in support of the majority view. In some implementations, notifications of the critical comment may not be sent to one or more of the users. Since the critical comment can be displayed in a thread associated with the poll or otherwise with the poll, users can still see the critical comment and be influenced by the critical comment without receiving a notification. Therefore, one or more of the users at the user devices 106A-N can optionally change their votes based on seeing the critical comment, even if they don't receive a notification that directs their attention to the critical comment.

In some implementations, the computer system 102 can use tracking to estimate whether a user saw the critical comment. Methods similar to those used by internet advertising technology to track ad impressions can be used. Tracking pixels can be placed on websites or in emails where the critical comment is displayed. In other implementations, an application that displays a critical comment can keep a log of what comments were displayed on devices of identified users. In other implementations, such as applications where tracking user impressions may not be possible (e.g., a website where the user disabled or opted out of the use of tracking cookies), assumptions can be made about what comments the user saw. For example, it can be assumed that the user sees any notifications that are sent to the user. In other implementations, it can be assumed that the user sees any notifications that appear in their feed, or on the home page.

The computer system 102 can receive updated votes or an absence of updated votes from the portion of users in the majority vote (I). Absence of action in response to seeing or being notified of the critical comment can indicate that the user was not swayed by the critical comment and therefore remained with their original majority vote. An updated vote, as mentioned above, can indicate that the user was swayed by the critical comment and therefore changed their vote from the original majority vote in favor of the minority view represented by the critical comment.

The computer system 102 can determine a deliberative consensus (J), as described herein. The deliberative consensus can be calculated based on a quantity of users who saw the critical comment. The consensus can be a ratio of a quantity of users in the majority view who saw the critical comment to a total number of users who saw the critical comment. In some implementations, the consensus can be calculated based on a difference in the ratio of users in the majority view among those who saw the critical comment and a ratio of users in the majority view among those who did not see the critical comment. This calculation can be one of probability that a user takes the majority view given that they have seen the critical comment. This calculation can also include statistical methods, such as t-test, chi square, and/or Baysian inference.

The deliberative consensus can also be a ratio of how many of the portion of users in the majority view changed their votes in response to receiving and/or seeing the critical comment. The deliberative consensus ratio can also include the user (e.g., the user at the user device 106B) who wrote the critical comment. In some implementations, a probability-based calculation can be used to determine the deliberative consensus, using any of a variety of statistical techniques that can, for example, calculate a probability that a difference between the deliberative consensus and overall poll results is due to pure chance (e.g., calculate a p-value), and estimate a blended overall probability that an average user in the group may agree or disagree if they had seen the critical comment. Moreover, the deliberative consensus can take into consideration not just a current critical comment, but also an estimate of a probability that the average user may agree (e.g., like, comment, share, etc.) with the comment if they had seen all comments that had been made in the poll.

In some implementations, the deliberative consensus can also include users that saw the critical comment, whether or not such users originally voted with the majority, were notified of the critical comment, or even reacted to the poll or the critical comment. Such users can form an informed consensus, which can be considered a consensus among users who had been informed of all important or relevant information and arguments that were raised in a critical thread associated with the poll. Moreover, in some implementations, it may not be necessary for users to actually change their votes in order to measure an influence of a comment. This can occur in social media environments (e.g., TWITTER, INSTAGRAM, FACEBOOK, etc.) where thousands of users can see a comment and responses to that comment in a post. In these environments, a user can see if there is a difference in percentage of users that like, retweet, etc. the post among the users that saw a critical comment versus those that did not see the critical comment.

Furthermore, the deliberative consensus can consider an entire critical thread. In such implementations, the deliberative consensus of the latest comment in the thread can override (or having more weight in the blended consensus) the deliberative consensus of previous comments in the thread. The deliberative consensus can also take into consideration multiple independent critical comment threads.

The deliberative consensus can be outputted to all the users at the user devices 106AN. The deliberative consensus can be outputted with the overall poll results to provide the users with a more holistic and informed view of the decision making process for the poll.

One or more of the steps A-J can be repeated for each poll presented by the frontend server 104. Moreover, one or more of the steps A-J can be repeated in response to determining the deliberative consensus in J. For example, the deliberative consensus can be outputted to the user devices 106A-N along with poll results, the critical comment, and/or the critical comment thread. If the poll is still open for voting, one or more of the users at the user devices 106A-N can change their votes based on receiving and/or seeing the deliberative consensus, the poll results, the critical comment, and/or the critical comment thread. The computer system 102 can then receive such changes, identify a new critical comment, update a critical comment thread (e.g., the notification of a new critical comment), determine an updated portion of users in the majority vote, and/or determine an updated deliberative consensus.

The steps A-J can continue until a discussion ends, such as when members of either the majority view or the minority view stop responding to critical comments. Moreover, when the steps A-J repeat, updated critical comments can be sent to either users in the majority view or users in the minority view. For example, if in response to a critical comment made by the minority view, a user in the majority view replies with a comment, the user in the majority view's reply can be deemed the updated critical comment. This updated critical comment can be transmitted and/or outputted to users in the minority view to engage those users in discussion with the users in the majority view. The critical comment and notification of the comment can flip back and forth between a comment that represents the majority view and a comment that represents the minority view, depending on who made the comment and until discussion ends.

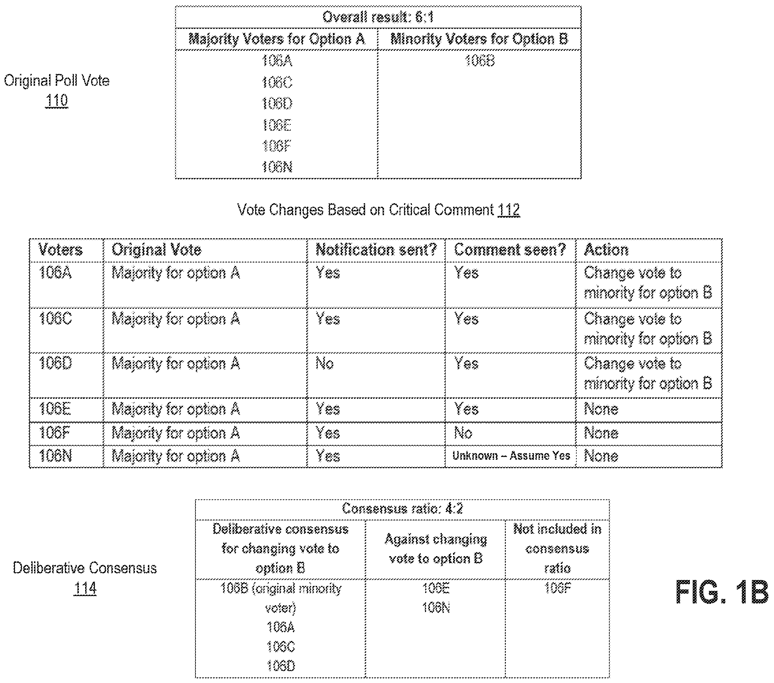

FIG. 1B depicts determining the deliberative consensus of FIG. 1A. Original poll vote table 110 indicates which way users at the user devices 106A-N voted in response to the poll that was transmitted from the frontend server 104. The user devices 106A, B, C, D, E, F, and N received the poll. In the example of FIGS. 1A-B, the poll has two options, option A and option B. Users at the devices 106A, C, D, E, F, and N voted the same way, for option A. The user at the device 1 06B is the only user that voted for option B. Therefore, a majority of votes are for option A and option A is the majority view in this group. Option B is a minority view. An overall poll result is 6:1, or 6 users in favor of option A and 1 user in favor of option B.

Since option B is identified as the minority view and the user at the user device 106B is the only one who commented on the poll, the comment made by the user at the user device 106B can be designated as a critical comment. In other words, the comment by the user at the user device 106B is not a comment in support of the majority view, otherwise the user at the user device 106B would have voted for option A, which is the majority view. As described in reference to FIG. 1A, a portion of the users at the user devices 106A-N can be identified as being in the majority view. Here, users at the devices 106A, C, D, E, F, and N are the portion of users in the majority view. Once the critical comment is identified, one or more of these devices can receive a notification indicating the critical comment made by the user at the user device 106B.

Vote changes based on critical comment table 112 depicts responses, or lack of responses, to receiving notification of the critical comment from the portion of users in the majority view. The table 112 indicates the portion of users in the majority view, their original votes, whether a notification with the critical comment was sent to each of those users, whether the critical comment was seen by each of those users, and an action, or inaction, taken by each of those users.

Here, users at the devices 106A and C originally voted for option A, received the notification of the critical comment, saw the critical comment, and changed their vote to the minority view for option B in response to seeing the critical comment. The user at the device 106E received the notification of the comment, saw the critical comment, but did not change their vote. This inaction can indicate that the user was not swayed by the critical comment and therefore the user stuck with their original vote for option A. The user at device 106D did not receive the notification but did see the critical comment and changed their vote to the minority view for option B. This indicates that users may be swayed to change their vote by seeing the critical comment without receiving a notification that directs their attention to the critical comment.

The user at the device 106F was sent a notification, but did not see the critical comment, and did not change their vote from the majority opinion. Even though this user was notified of the critical comment by receiving the notification, the user did not see the critical comment. Finally, the user at the device 106N received the notification of the critical comment but it is uncertain whether the user actually saw the critical comment. The user at the device 106N did not change their vote from option A.

Deliberative consensus table 114 depicts a deliberative consensus for the poll based on the critical comment. The table 114 can indicate a consensus ratio (e.g., deliberative consensus), users in a deliberative consensus that changed their vote from option A to option B, and users against changing their vote from option A to option B. In some implementations, only users who saw the critical comment can count in determining the deliberative consensus. As a result, the user at the device 106F, who never even received a notification of the critical comment, may not count in calculating the deliberative consensus. If it is certain that the user did not see the notification, then they may not be counted in the deliberative consensus (except on probability-based calculations). In some examples, notifications can track activity of the user (e.g., whether the notification was received, viewed by the user, opened, etc.). Metadata relative to the notification tracking can be used to determine whether the user in fact saw the critical comment or whether it is uncertain that the user saw the critical comment.

As shown in the table 114, users who were notified of the critical comment, saw the comment and/or maybe saw the comment can be included in the deliberative consensus calculation. In other words, if the notification was sent to a user but it is uncertain whether the user saw the critical comment, then that user should be counted in the deliberative consensus. The user at the device 106N is included in the deliberative consensus. The comment was displayed on the user's screen, even though it is uncertain whether the user at the device 106N actually saw and paid attention to the critical comment. In such a situation, the user at the user device 106N is included in the deliberative consensus calculation but the user at the user device 106F is not included since the critical comment was never displayed at the device 106F.

As described herein, the deliberative consensus is a ratio of users in the majority view who saw the critical comment (or may have seen the critical comment) and did not change their vote to users in the minority view, or to total users. In the table 114, the users in the deliberative consensus who changed their vote to option B includes users at the devices 106A, C, and D. The user at the user device 106B can also be part of the deliberative consensus since the user who posted the critical comment also saw the critical comment. Since users at the devices 106E and N did not change their votes from the majority view in response to receiving notification of the critical comment, these users are considered against changing their vote to option B. The resulting consensus ratio, or deliberative consensus ratio, is 4:2 (four users in the group for option B and two users in the group against option B).

As described herein, the deliberative consensus ratio can be outputted to one or more of the user devices 106A-N along with the original poll results, the critical comment, and/or a thread of critical comments. The deliberative consensus ratio and/or the critical comment can also be updated or modified in real-time based on feedback from the users at the user devices 106A-N (e.g., changing votes, responding to critical comments, engaging in discussion, etc.).

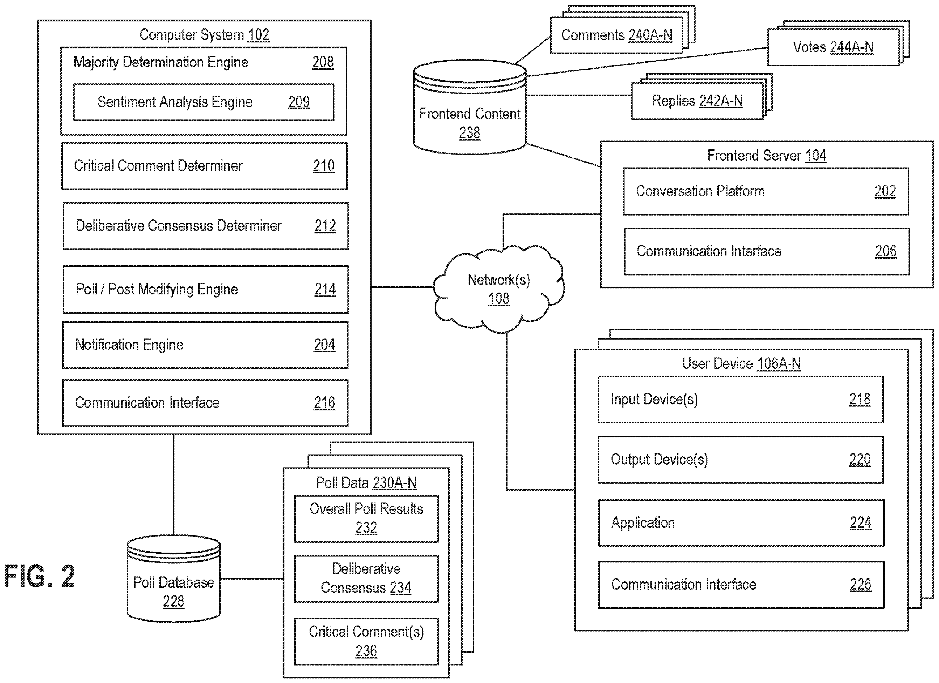

FIG. 2 is a system diagram of components used in determining a deliberative consensus. The computer system 102, frontend server 104, and user devices 106A-N can be in communication via the network(s) 108. The computer system 102 can also be in communication with a poll database 2.2.8. The frontend server 104 can also be in communication with a frontend content database 238. The databases 228 and 238 can be cloud storage, remote storage, or any other storage or database.

The front end server 104 can be a social media server, a corporate decision support tool, an online forum internal to an organization or enterprise, or an external forum available for user devices 106A-N within a network or remote from each other. The frontend server 104 can include a conversation platform 202 and a communication interface 206. The conversation platform 202 can be configured to provide a social environment to one or more of the user devices 106A-N. The conversation platform 202 can be a social media platform and can facilitate users at the user devices 106A-N in making posts or polls. Thus, a post or poll can be a form of conversation. The platform 202 can be for a mobile or online application, such as TWITTER, FACEBOOK, TIK TOK, and/or INSTAGRAM. The platform 202 can also provide another platform for communication amongst groups of users, such as employee or team management software or modules (e.g., GOOGLE ITAMS, SLACK, etc.). The communication interface 206 can be configured to provide for communication between one or more of the components described herein.

The user devices 106A-N can each include input device(s) 218, output device(s) 220, an application 224, and a communication interface 226. The input device(s) 218 can be configured to receive input from a user in response to a poll, post, comment or other information presented in the application 224 from the frontend server 104. The input device(s) 218 can also be configured to receive information from a user to generate a poll or post in the application 224. The frontend server 104 can receive user input to generate the poll or post. User input can be stored in the frontend content 238. For example, the frontend content 238 can store comments 240A-N, replies to comments 242A-N (e.g., reactions, comments), and/or votes 244A-N (e.g., upvotes, downvotes, likes, or dislikes). The frontend server 104 can also be configured to integrate information stored in the frontend content 238 to then display the poll or post in the application 224 of the user devices 106A-N.

The input device(s) 218 can include a touchscreen display, mouse, keyboard, microphone, or other devices used for receiving user input. The output device(s) 220 can be a touchscreen or other display that can be configured to output or display the application 224, votes from other users at the user devices 106A-N, and other information that can be displayed as part of the application 224. The application 224 can be a mobile application installed or downloaded onto the user devices 106A-N, such as a social media platform. The application 224 can be provided by the frontend server 104. The application 224 can be updated in real-time based on comments, likes, or other activity by users at the user devices 106A-N and/or the computer system 102. The communication interface 226 can be configured to provide for communication between one or more of the components described herein.

The computer system 102 can include a majority determination engine 208, a critical comment determiner 210, a deliberative consensus determiner 212, a poll or post modifying engine 214, an inference generator 215, a notification engine 204, and a communication interface 216. As described herein, the computer system 102 can receive votes, comments, or other activity from each of the user devices 106A-N. Such activity can be received at the user devices 106A-N via the input device(s) 218. Based on the activity received at the computer system 102, the majority determination engine 208 can be configured to determine a majority vote or view for the poll. The majority determination engine 208 can optionally have a sentiment analysis engine 209. The sentiment analysis engine 209 can be configured to determine a sentiment of comments or reactions to the poll. The determined sentiment can then be associated with an agreement side and a disagreement side. The critical comment determiner 210 can then be configured to determine or identify a comment made in response to the poll by a user who is not in the majority view. As described herein, the critical comment determiner 210 can also be configured to compare or rank multiple comments that may be identified as critical of the majority view. Thus, the determiner 210 can rank comments from most critical to least critical of the majority view.

The poll or post modifying engine 214 can be configured to generate instructions about how a poll thread or feed should be modified. The engine 214 can communicate the modification instructions to the frontend server 104. Using the instructions and information accessed from the frontend content 238, the frontend server 104 can format the poll thread or feed. Once the frontend server 104 modifies the poll thread or feed, the poll thread or feed can be transmitted to the user devices 106A-N for display at the output device(s) 220. The modification instructions can include rearranging content to provide more emphasis on the critical comment, critical comment thread, and/or deliberative consensus.

The notification engine 204 can be configured to generate a notification indicative of critical comments and/or critical comment threads. In some implementations, the notification can include a link to the critical comment. In other implementations, the notification can include a portion of a thread of the poll that includes the critical comment. In yet other implementations, the notification can output the critical comment. In other implementations, the notification can output the critical comment in some context, such as a comment made before and a comment made in response to the critical comment. The engine 204 can also be configured to determine which users in the group of users voted in the majority view so that the engine 204 can determine which users should receive the notification and/or modified poll thread or feed. The engine 204 can then send the notification of the critical comment to the identified portion of users in the majority view at the user devices 106A-N. In some implementations, the notification engine 204 and the poll/post modifying engine 214 can be a same engine. In other implementations, the engines 204 and 214 can be separate, as depicted in FIG. 2.

The deliberative consensus determiner 212 can be configured to determine a deliberative consensus ratio, as described herein. The determiner 212 can receive information from each of the devices 106A-N that received the notification of the critical comment. The information can include an indication of whether the notification was sent to the devices 106AN, whether the notification was seen by a user at the devices 106A-N, and/or any changes (or inaction) to a vote or comment or other activity by a user at the devices 106A-N. As mentioned, the determiner 212 can also receive an indication of an absence of activity or action by a user at the user devices 106A-N. An absence of activity or action can indicate that the user either did not see the critical comment or did see the critical comment but was not swayed by the critical comment to change their vote.

The deliberative consensus can be a ratio of the user in the majority view, plus any users in the majority who changed their votes in response to the critical comment against users in the majority who did not change their votes in response to seeing the critical comment. In some implementations, the deliberative consensus can be a ratio of the user who made the critical comment plus users who liked, upvoted, changed their vote after seeing the critical comment, or otherwise indicated a positive response to the comment, to users in the majority view who did not change their votes in response to seeing the critical comment. As mentioned throughout, the deliberative consensus can be dynamically updated based on a critical comment at any given time.

Once the deliberative consensus is determined, the poll or post modifying engine 214 can generate instructions for updating the poll and transmit the instructions to the frontend server 104. The conversation platform 202 can update the poll according to the instructions and then transmit the updated poll to the user devices 106A-N for display in the application 224. The thread can be updated to include the deliberative consensus ratio, overall poll results, the critical comment, and/or a thread of the critical comment and/or other comments.

Moreover, the inference generator 215 can also be configured to determine a deliberative consensus. For example, the inference generator 215 can use distributed Bayesian Reasoning to determine the deliberative consensus, as described in Application No. 63/302,928, entitled SYSTEMS AND METHODS FOR DETERMINING JUSTIFIED OPINIONS AMONG USERS IN A GROUP OF DIFFERENT OPINIONS, which is incorporated herein by reference. Distributed Bayesian Reasoning can be used, by the inference generator 215, to estimate a probability that a group member may agree with a proposition if the group member saw all comments that had been made.

As described herein, the majority determination, the critical comment determination, the deliberative consensus determination, and/or updates to the poll or post can be continuously performed by components of the computer system 102. Doing so can assist a group of voters to make more informed decisions and engage in discussions.

Finally, the communication interface 216 can be configured to provide for communication between one or more of the components described herein.

Still referring to FIG. 2, the computer system 102 can be in communication with the poll database 228. The database 228 can store information per poll that is generated and provided to users by the frontend server 104. For example, for each poll data 230A-N, overall poll results 232, a deliberative consensus ratio 234, and critical comment(s) 236 can be identified and/or stored. This information can be displayed at the user devices 106A-N with each of the polls 230A-N presented in the application 224. As described herein, the poll or post modifying engine 214 of the computer system 102 can be configured to generate instructions for rearranging a feed in the application 224 at each of the user devices 106A-N. The rearranging instructions can, for example, require placing the critical comment(s) 236 at a top of the feed for the poll. Thus, users attention can be brought to the top of the feed, to the critical comment(s) 236 such that the users can make more informed decisions (e.g., change their vote from the majority vote to the minority vote). The poll data 230A-N can be communicated to the frontend server 104 and used along with information stored in the frontend content 238 to provide polls or feeds to the user devices 106A-N.

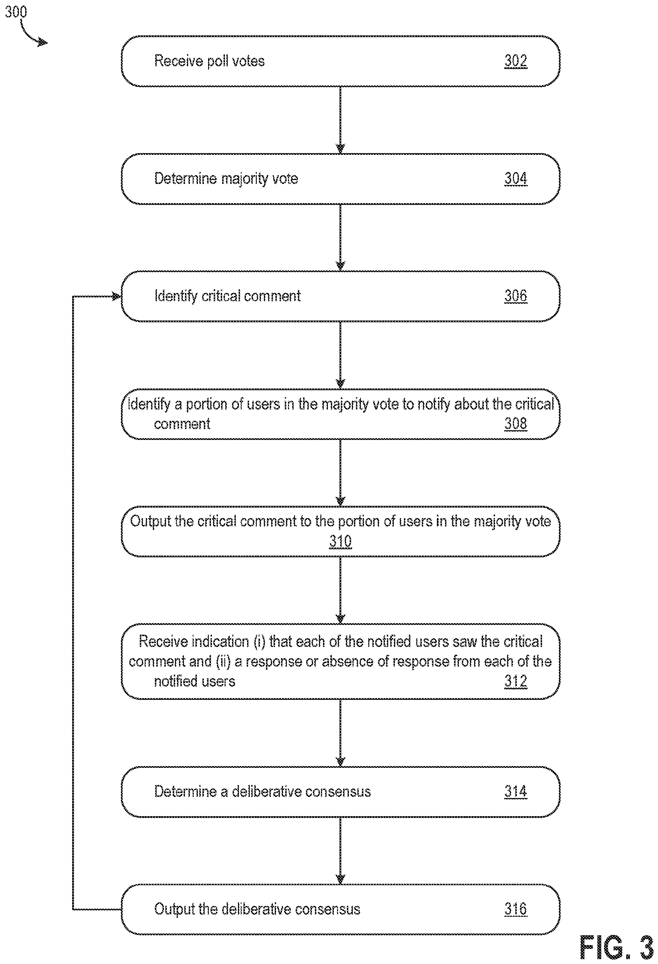

FIG. 3 is a flowchart of a process 300 for determining a deliberative consensus. The process 300 can be performed by the computer system 102. One or more steps of the process 300 can also be performed by the frontend server 104 or any other computer system

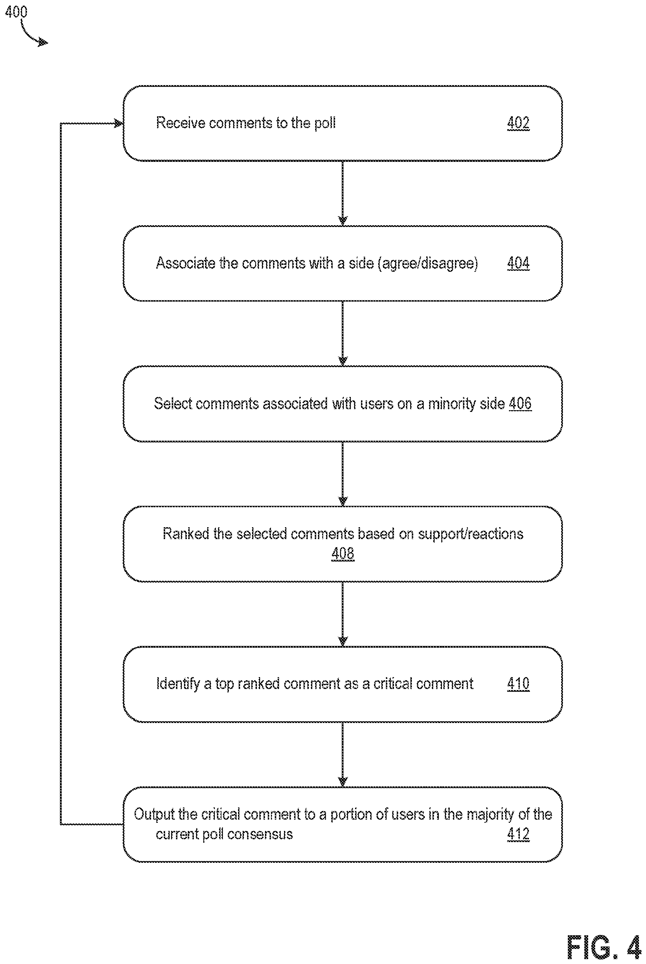

Referring to the process 300, poll votes can be received in 302. A majority vote can be determined in 304. As described herein, the majority vote can be determined based on counting how many users voted for each option or viewpoint in the poll and identifying which viewpoint has the most amount of votes. A critical comment can then be identified in 306, as described herein (e.g., refer to FIGS. 4A-B). The critical comment can be identified based on one or more factors. For example, the critical comment can be one made by a user in a minority vote, a user who did not vote, or a user who downloaded a comment or content from the poll thread. The critical comment can also be one that, using machine learning, deep learning, and/or textual sentiment analysis, is in agreement with the poll, in disagreement with the poll, or is neutral. A comment that counters the majority view/vote can be identified as the critical comment. In other implementations, the critical comment can be a response to a previous critical comment. The critical comment can also be the start of a new critical thread. In some implementations, as described herein, the critical comment can be identified as a comment that is considered most convincing to a majority of users interacting with the poll (e.g., the comment causes the majority of users to change their vote or provide another response/reaction to the poll).

As further described herein, where more than one comment is critical of the majority view, these comments can be ranked from most critical to least critical. The most critical comment can be identified as the next critical comment for the thread. In other implementations, more than one critical comment can be identified as critical comments for the thread. In some implementations, there can be multiple critical comment threads. Each critical comment thread should be defined as a critical comment, followed possibly by a critical response to that comment, followed possibly by a critical response to that response, and so on. In an example post, there can be a most critical comment C and a less critical comment D, where D can be a direct response to the post, not a response to C. Since there are two critical comments, there is a probability that users agree or disagree given they have seen C, given they have seen D, given they have seen C and D, and given they have seen neither. In this example, statistical logic can be used to calculate a probability that a user would agree given they had seen all the arguments. In a large enough pool of users, a ratio of users who agree or disagree from among just the group that actually saw both C and D can also be determined.

A portion of users in the majority vote can then be identified in 308. The portion of users in the majority vote can include all the users who voted in the majority. The portion of users can optionally include less than all the users who voted in the majority. In some implementations, the majority can be identified by weighing users' votes based on their assigned reputations. Therefore, as an example, the majority can be a minority of users, but the minority of users may control a majority of reputation (e.g., tokens) amongst all the users engaging with the poll. The identified portion of users in the majority vote can be notified about the critical comment. Thus, the critical comment can be outputted to the portion of users in 310. As described herein, a notification linking or displaying the critical comment can be provided on feeds at devices of each user in the portion of users.

Outputting the critical comment can include updating the poll. The critical comment can also be formatted or pushed to a top of a feed or poll for viewing at the devices for the portion of users in the majority vote. Therefore, a critical comment thread can include the critical comment. The critical comment in the thread can be followed by one or more critical responses to that comment. In other implementations, users can click on the poll to view associated comments without being prompted to view a particular comment. The critical comment can also be outputted underneath the poll or anywhere in the poll where users can see it without a notification being sent to the users to look at the critical comment. In some implementations, the critical comment, or at least part of the critical comment or critical comment thread, can be continuously displayed with the poll such that the users can see the comment whenever they are looking at the poll.

An indication can be received (i) that each of the notified users saw the critical comment (or at least that the critical comment was displayed at user devices) and (ii) a response or absence of response was made from each of the notified users (312). In other words, vote changes can be received. Absence of a response can be an endorsement of the user's original vote and therefore a desire to remain with the majority vote. Whether a notified user saw the critical comment can be advantageous in determining a deliberative consensus. For example, the deliberative consensus can be based on notified users who actually saw the critical comment and either changed their vote in response or did not change their vote. In other examples, the deliberative consensus can be based on notified users who received the critical comment, regardless of whether they actually saw the critical comment. In yet other implementations, as described in reference to FIG. 1B, the deliberative consensus can be based on notified users who in fact saw the critical comment and notified users who may have seen the critical comment. It can be assumed that users saw the critical comment if they were explicitly notified and there's no indication that the users did not see the notification. It can also be assumed that users saw the critical comment if they interacted with the comment in any way (e.g., the users clicked on the comment or poll in general to see if there were any responses).

A deliberative consensus can be determined in 314, based on the indication received in 312. As described herein, the deliberative consensus can be a ratio of a quantity of the majority voters who changed their vote in response to the critical comment plus the user who made the critical comment against a quantity of the majority voters who received (and/or saw) the critical comment but did not change their vote.

When voters change their votes, it can indicate that the critical comment provoked thoughtful discussion and that the comment was in fact important in making an informed decision. Thus, the deliberative consensus can be a value indicative of how many of the voters in the majority changed their vote based on the comment. If votes are not changed in response to a critical comment, then the deliberative consensus can remain the same. Over time, as more votes change and/or more critical comments are identified and provided to users in the majority, the deliberative consensus can be updated and changed.

The deliberative consensus can be outputted in 316. The deliberative consensus can be outputted in a feed at the devices of each of the users in the majority and/or the minority view. The deliberative consensus can be outputted with a critical comment thread, the critical comment, and/or overall poll results. The deliberative consensus can also be outputted with the poll thread. Comments in the poll thread can be ordered from a highest criticalness to a lowest criticalness. For example, a critical comment that caused a greatest number of majority voters to change their votes can be displayed at the top of the poll thread. A comment that did not cause any majority voters to change their votes can be pushed to the bottom of the poll thread. As a result, poll viewers can be informed about what comments caused one or more of the majority voters to make more informed decisions and change their original votes.

In some implementations, posts in the thread can be filtered or sorted based on the deliberative consensus. For example, instead of sorting posts in a feed based on raw popularity (e.g., up vote count, number of likes, number of shares, etc.), the deliberative consensus can be used for sorting. A popular but misleading post, as an illustrative example, may appear at the top of a user's feed because the post has a significant quantity of up votes and/or a high click-through rate. However, after the deliberative consensus is determined using the techniques described above and throughout this disclosure, the post may have a low deliberative consensus in comparison to other posts in the feed. Accordingly, the post with the low deliberative consensus may not appear at the top of the user's feed. A post (or multiple posts) with a higher deliberative consensus may appear at the top of the user's feed. Similarly, posts can be filtered based on the deliberative consensus. As an illustrative example, if a post has a deliberative consensus that satisfies a threshold condition, the post can be presented in the feed. If the post's deliberative consensus does not satisfy the threshold condition, then the post may be filtered out of the feed and therefore would not be presented in the feed with other posts. The threshold condition an include a high deliberative consensus, such as a numeric value that exceeds a threshold deliberative consensus value, a Boolean value indicating "High" for deliberative consensus (instead of "Low"), and/or a string value such as "This content is misleading, inappropriate, etc." (instead of a string value such as "This content is good"). One or more other threshold conditions may also be used to filter and/or sort posts that are presented in the feed based on the deliberative consensus.

Steps 306-316 can be repeated in the process 300 for each poll. For example, one or more steps of the process 300 can be repeated until a poll is closed and/or for a predetermined amount of time. The process 300 can be repeated until discussion ends in the poll. For example, if no one in the majority responds to the critical comment or changes their votes, the discussion can be deemed as ended. In another example, if someone in the majority replies to the critical comment then someone in the minority responds to the reply, discussion is deemed to be ongoing until there are no more back and forth replies. During this back and forth discussion, the critical comment can be continuously updated and provided to different portions or groups of users for that poll. For example, users in the majority can receive the first critical comment notification. Where a user in the majority replies to the first critical comment, users in the minority can receive notification of this reply; the reply can be a second critical comment. The process 300 can therefore repeat in a feedback loop until discussion ends and/or the poll closes.

FIG. 4 is a flowchart of a process 400 for determining a critical comment to a poll. The process 400 can be performed by the computer system 102 and/or any other computer system. The process 400 can begin once a poll receives one or more comments. The process 400 can then be repeated for subsequent reply comments or reactions from group members.

Referring to the process 400, comments to the poll can be received in 402. The comments can be associated with a side in 404. Textual sentiment analysis can be used in 404. Sentiment analysis can be performed when a poll receives one or more comments. It can also be performed whenever there is a reaction or reply to any comments or activity in the poll. It can be used when the user interfaces at user devices do not allow users to explicitly express agreement or disagreement, such as when the poll is a social media post where there is no option for downvoting. Using sentiment analysis, a sentiment of comments can be determined as being generally positive or in agreement with the poll, or generally negative or in disagreement with the poll. If users have the option of upvoting or liking a comment, users votes can be inferred based on the sentiment of the comments that they like. For example, if a comment is generally negative or against a decision proposed in a poll, and a majority of users agree with that comment, then the sentiment of the majority vote can be identified as negative or against a decision.

One or more other methods or techniques can be used in 404, such as machine learning and/or deep learning techniques and algorithms. For example, associations can be made by counting votes of users who submitted comments or liked comments. For example, if user A votes "Disagree" and submits a comment B, comment B can be associated with the disagreement side based on votes. If, on the other hand, A does not vote (e.g., for example, a social network may not provide dislikes, downvotes, or other disagreement buttons or features), then sentiment analysis can be used to determine whether comment B expresses a supporting or dissenting sentiment.

One side can be in agreement with the poll and the other side can be in disagreement with the poll. The sides can make up a current poll consensus. Comments made by users who voted in the majority view can be associated with the majority view or majority side. Comments made by users who voted in the minority view and/or users who did not vote in the poll can be associated with the minority view or minority side. In other words, any comments that are critical of or do not share the same sentiment as the majority view can be associated with the minority view.

Then, comments associated with users on the minority side can be selected in 406. In an implementation where only one comment is associated with users not in the majority view, that comment can be identified as the critical comment since the one comment can be associated with the minority view. In other implementations where more than one comment can be associated with users not in the majority view, the selected comments can be ranked based on support and/or reactions in 408. For example, one of the selected comments that received a number of comments in reply and/or likes or dislikes (e.g., upvotes, downvotes) can be ranked higher than one of the selected comments that did not receive reactions. A higher ranking can indicate that the selected comment is more critical, important, or convincing to users for making an informed decision than lower ranked comments. A higher ranking score can be assigned based on a number of views, a number of likes or replies, and/or a number of views, likes, and/or replies relative to how many users received and/or saw the comment.

A top ranked comment can be identified as a critical comment in 410. As described herein, the comment with the highest ranking can be the critical comment. In some implementations, the first chronological comment can be the critical comment. The critical comment can be outputted to a portion of users in the majority of the current poll consensus in 412. As described herein, the portion of users in the majority can include all the users in the majority. The portion of users in the majority can also include less than all the users in the majority.

As mentioned above, the critical comment can be a comment that is the most highly upvoted comment amongst users in the minority. In some implementations, the critical comment can be identified as a comment that changes minds (e.g., changes the most amount of minds of users in the majority). The comment that changes the most amount of minds can be identified based on determining a probability that a user accepts and/or rejects a poll after seeing the comment. The comment can also be identified by a probability that the user likes, shares, upvotes, or takes some other action in response to a post after seeing the comment. The comment may therefore prove itself by changing the user's mind, and therefor should be broadcasted to more users (e.g., more users in the majority). As an example, the critical comment can be identified as a comment having a highest ratio: *P(agree*|*seen comment)* / *P(agree* |*not seen comment)*. Ratios that are over 1 (or a threshold amount over 1) can be indicative of a comment that is informative, highly informative, very informative, and/or most informative. In some implementations, the critical comment can also be identified by taking the log of the ratio. In yet some implementations, the critical comment can also be identified as a comment having a highest difference: *P(agree*|*seen comment)* m *P(agree*|*not seen comment)*. A difference over 0 (or some threshold amount over 0) can indicate that the comment is informative, highly informative, very informative, and/or most informative. Moreover, a difference of logarithms of probabilities can also be used to identify the critical comment. In some implementations, the relative entropy (e.g., KL Divergence) between these probabilities can be used. This difference can be a measure of information content (e.g., in bits) of the critical comment.

Moreover, in some implementations, the critical comment can be identified using distributed Bayesian Reasoning, as described herein. Distributed Bayesian Reasoning can be used to calculate the deliberative consensus. The deliberative consensus can be determined before and after the users see a comment. The comment that causes a biggest change in deliberative consensus before and after it is seen by the users can be identified as the critical comment. For example, the a probability that a user would believe the comment before seeing the comment can be calculated as well as a probability that they do believe the comment after seeing the comment. A shift between these two probabilities can be measured and identified to determine whether the user was convinced and thus whether a fully informed user would also be convinced by the comment. Such techniques can also be used, in some implementations, to mold convincing comments and identify what makes good arguments in an unbiased way.

In yet some implementations, the critical comment can be identified using clustering techniques. Instead of or in addition to analyzing units of a comment and replies to the comment, clusters of comments can be identified. Changes amongst comments in the clusters can be identified. While users in a cluster change their opinions over time, and potentially move into other clusters, comments during that time that might have caused the users to change their opinions can be identified. K-means clustering and/or principal component analysis (PCA) can be used. The critical comment can then be determined from those comments that occurred during the time users were changing their opinions.

In yet some implementations, the critical comment can be identified using techniques of argument mining. With argument mining, unstructured conversations can be analyzed to identify an argument structure (or multiple argument structures) therein. Argument mining can therefore provide for automatic extraction and identification of argumentative structures from text, such as the unstructured conversations. Techniques such as textual semantic analysis can be used to extract and identify the argument structure in the unstructured conversation. One or more other natural language processing techniques may also be used to identify the argument structure. The argument structure can then become the critical comment. Argument mining can be useful in online discussion boards and email threads, in which an argument is taking place that a human can follow through text but that a computing system may not be able to follow as readily. For example, a first user can say that red wine causes cancer and a second user can say later in the thread that a study exists that says red wine prevents cancer. In between the two comments, there can be a lot of other discussion that does not relate to the argument. Using argument mining techniques, a computer system can isolate the two comments and identify the second comment as an argument against the first comment. Then, the computer system can identify majority and minority users in order to identify the second comment as the critical comment, using the techniques described herein. In some implementations in which the argument structure includes a series of comments, the critical comment can be identified from within the argument structure. For example, using the techniques described above, the critical comment can be identified within the argument structure as the highest upvoted comment and/or the comment that changed the most minds of the users in the group. One or more other techniques described herein can also be used to identify the critical comment from within the argument structure.

One or more steps of the process 400 can be repeated. For example, one or more of the steps can be repeated whenever a user votes for a first time, changes their original vote, posts a comment, replies to a critical comment, replies to an original comment, or otherwise reacts to existing poll activity.

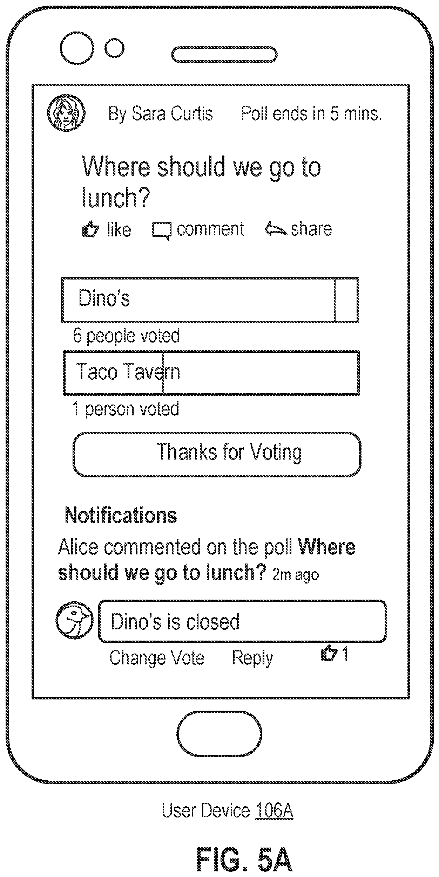

FIGS. 5A-C depict an example use case of deliberative consensus in an online polling environment. As described throughout FIGS. 1-4, a poll can be presented at each of the user devices (e.g., the user device 106A), as depicted in FIG. 5A. In this example use case, suppose a group of coworkers votes on where to go to lunch. Six people vote for Dino's, but Alice votes for Taco Tavern and says "Dino's is closed today." In person, that comment can settle the matter since everyone who voted for Dino's could change their vote to Taco Tavern. Online, however, this comment may be overlooked and can be buried in a comment thread that others in the group may not read. Even those who read the comment may not react by changing their votes. As a result, the poll results can be stale, representing initial reactions that are not an informed, reasoned consensus of the group.

Voters' attention can be directed to comments overlooked and what may warrant follow-through. Moreover, as described herein, a poll result can be displayed to voters that presents both a deliberative consensus as well as initial votes. As a result, voters can get a more informed and holistic view of a decision making process with regards to the poll.

As described herein, the comment made by Alice can be identified as a critical comment since Alice was the one person who voted for Taco Tavern. Everyone else in the group voted in the majority for Dino's. A prompt can be placed in the poll feed or a notification can be sent to one or more of the group members who voted for Dino's that asks the one or more group members whether they saw Alice's comment. As depicted in FIG. 5A, Alice's comment is included in a notification at the bottom of the poll. The notification can prompt the one or more group members to take some sort of action, whether it is viewing Alice's comment, thinking about her comment, or replying to it. The disclosed technology can, for example, recognize that Alice's comment represents a reason not to vote with the majority for Dino's (e.g., the comment is contrary to the majority vote view). The disclosed technology can recognize that nobody in the majority read the comment (e.g., the computer system 102 can receive an indication of how long each group member at their respective user devices spent on a portion of the screen where the comment is located), and it can reason (e.g., using sentiment analysis, machine learning, and/or deep learning) that a coherent judgment probably requires someone in the majority view to read the comment.

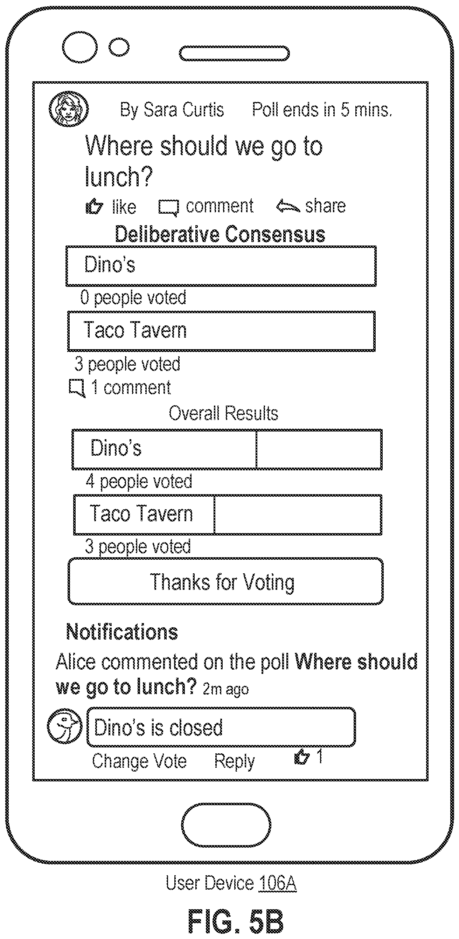

As depicted in FIG. 5B, once members of the majority view see the notification about Alice's comment, one or more of the members can change their vote. A deliberative consensus can therefore be displayed next to or along with the overall poll results. In this example, the deliberative consensus can be three in favor of Taco Tavern (Alice plus the two members from the majority vote who changed their vote), and zero against - even though the overall poll results are still 4:3 for Dino's. This can be because there was a unanimous consensus for Taco Tavern among the people who saw Alice's comment - that is, those who participated in the critical discussion thread and were informed on the points raised.

Suppose the group adopted a norm of making decisions based on the deliberative consensus. Then, they can go to Taco Tavern. The four who voted for Dino's may not know why they are going to Taco Tavern notwithstanding the overall vote - but if they have confidence in the deliberative poll process described herein, they may trust the group decision since the consensus was calculated based on an informed decision making process.

Suppose on the other hand that a member of the group, Bob, did not trust the result and wanted to go to Dino's. He could have clicked on the thread and read Alice's comment and then his vote would count in the deliberative consensus. If he agreed with Alice, he might have changed his vote and his vote would count for Taco Tavern in the deliberative consensus. If he disagreed with Alice, he could have responded with his reason to disagree, and the disclosed technology could continue the conversation by asking Alice and her anti-Dino's faction to respond to Bob's comment. The disclosed technology can provoke the members of the group to engage in informed discussion.

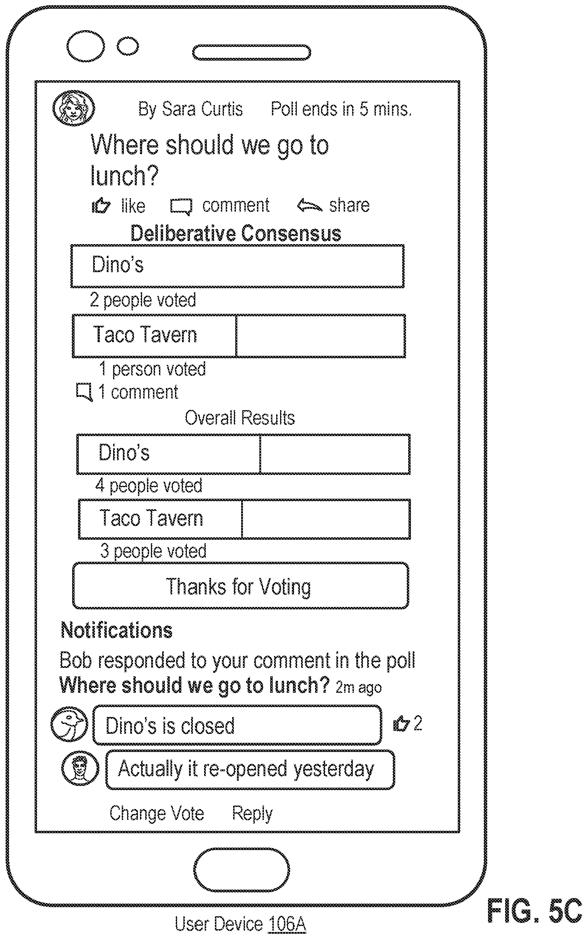

As depicted in FIG. 5C, a critical thread or a portion of the thread can then be displayed with the poll. The critical thread starts with the comment by someone in the minority that receives the most upvotes. This comment can be seen as the main reason that people question the majority vote, and is therefore the comment that most warrants follow-through. This can be the critical comment. The disclosed technology can then drive discussion forward by asking some people in the majority to respond to that critical comment. If the comment does not change minds, people may respond with a reason. For example, Bob might respond to Alice and say, "Actually Dino's re-opened yesterday." If this is the most-upvoted (or only) counter-argument, it can become the next item in the critical thread. A notification with this counter-argument can then be generated as described herein and outputted or transmitted to Alice's device as well as the devices of others who upvoted her critical comment. This counter-argument can become a new critical comment. This process can repeat and continue until the poll is complete and/or a final group consensus is made or participants stop arguing.

As one example, Bob's comment, which is a response to the initial critical comment, can become the new critical comment for the poll. However, if no one disagrees with Bob's comment, or no one responds to it, then the critical thread relative to Bob's comment can be terminated. On the other hand, suppose Jill comments on the main poll after Bob and says, "I got food poisoning from Dino's." This comment can become the new critical comment because it has support of at least one person in the minority (Jill). The original critical comment, Bob's comment, no longer has support.

As conversation proceeds, the deliberative consensus can flip back and forth and change, with the final result being determined by a smaller group of more informed participants. The conversation can end once one side stops responding. This can happen in two example situations. As one example, one side may not think it has a good argument to make. For example, if Dino's really did re-open yesterday, Alice may just accept the original group decision, and the conversation can end there. As a second example, the latest argument may not change enough minds. For example, if Alice does try to keep arguing and responds, "But I don't *like* Dino's," the disclosed technology can prompt Bob to respond to her comment. But now Bob can ignore it (neither responding nor changing his vote). This can be interpreted (e.g., by the computer system 102) as if Bob is saying, "I'm not convinced." Since Alice's objections may no longer be convincing members of the majority to change their votes, and the deliberative consensus has converged on the original majority view, there may be no point in further discussion. Thus, the discussion can end.

Referring to FIGS. 5A-C, consistency of group judgment and defeasibility of propositions can be important in calculating or determining the deliberative consensus. For example, it may not be logically consistent for the group to simultaneously judge that: A: We should go to Dino's for lunch, B: Dino's is closed, so B ⇒ ¬A: we should not go there for lunch. However, the judgment of the group can be a 4:3 consensus on A, and 3:0 consensus on B and on B ⇒ ¬A.This inconsistency may not exist if everyone voted on all three propositions. This is why the disclosed technology prompts people who only voted for A to vote on the other propositions as well. Even if prompting people to vote does not resolve the inconsistencies, such inconsistencies can be resolved using non-monotonic logic. In non-monotonic logic, propositions can be defeasible, which means they can be assumed as true unless someone gives good reason not to. Assuming defeasibility, the following set of propositions can be identified: (1) we should go to Dino's for lunch - *unless there is a good reason not to*!; (2) Dino's is closed...and this is a good reason not to go there for lunch!; and (3) We should not go to Dino's for lunch.

Another approach to aggregating group judgments is to calculate the probability that a group member will agree with a proposition, given that they have seen the comments in the critical thread. Two out of two people who saw Alice's comment changed their vote. None of the people who did not see her comment changed their vote. A statistical analysis using a t-test or chi square can suggest that it is improbable that the two people who happened to have their attention called to Alice's comment (selected randomly) were going to change their votes anyway. In other words, it can be probable that, if everyone saw Alice's comment, the majority would change their vote.

Both approaches described herein for aggregating judgment can produce the same or similar result: a logical, coherent interpretation of the votes of the group, rather than a blind adherence to the initial, un-deliberated vote results. Moreover, in some implementations, as described herein, distributed Bayesian Reasoning can be used to calculate and/or estimate what a group member would believe based on what has been shared with them and/or what they have seen in a discussion. This can be the case since Bayesian Reasoning assumes that group members base their decisions on certain claims made amongst other groups, where those other groups based their claims on other claims and/or facts. Thus, such decisions are more likely to be accurate and consistent with preferences of the group members. Distributed Bayesian Reasoning can therefore be used to scale discussions. Moreover, in some implementations, machine learning techniques and/or statistical models, such as Bayesian hierarchical models, can be used to calculate and/or estimate what the group member will believe.

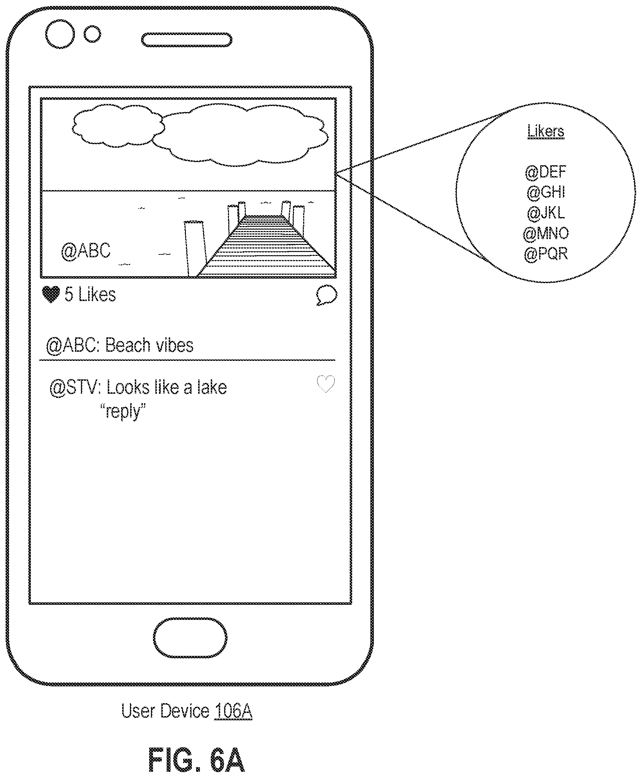

FIGS. 6A-B depict an example use case of deliberative consensus in an online social media platform. FIG. 6A depicts a photo post made by a user @ABC. Five people saw the photo post and liked it, including @DEF, @GHI, @IKL, @MNO, and @PQR. @ABC also posted a comment saying "Beach vibes." @STV, who did not like the photo post, posted a comment saying, "Looks like a lake." As described herein, @STV's comment can be identified as a critical comment since @STV did not like the photo and the five likes can be indicative of a majority view (e.g., liking the photo).

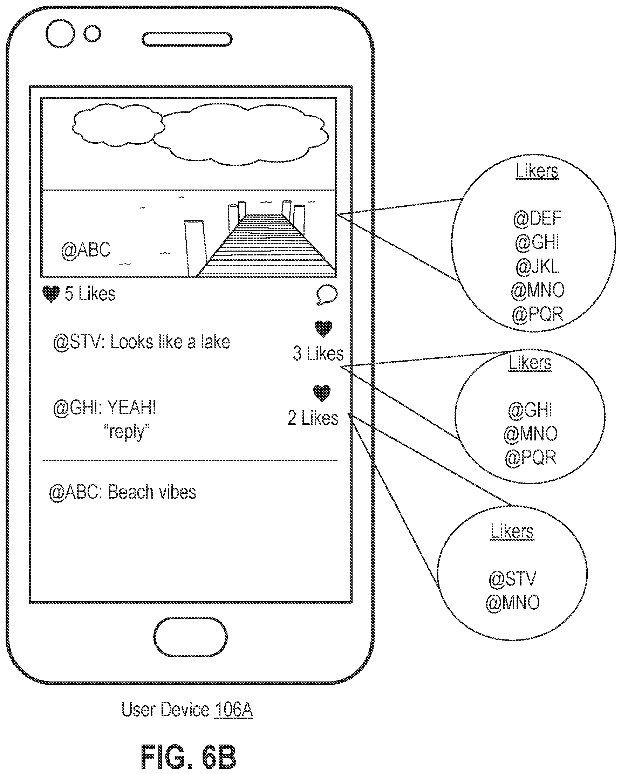

FIG. 6B depicts a first example updated or formatted view of the photo post thread based on identifying and outputting @STV's critical comment. @STV's critical comment can be raised to the top of the photo post thread and therefore brought to the attention of those who liked @ABC's original post. As shown, three of the original voters in the majority liked @STV's comment, @GHI, @MNO, and @PQR. A deliberative consensus can be calculated as a ratio of 4 people for @STV's comment and 2 people against the comment (e.g., @DEF and @JKL who saw or received @STV's comment but did not change their original votes). @GHI responded to @STV's comment and since two people liked that message (@STV and @MNO), @GHI's comment can be second in criticalness. @STV's comment can be most critical since it had the most impact on changing original votes, @GHI's comment can be a second most critical comment since it had some support/reaction, and @ABC's original comment can be the least critical comment in the thread and moved to the bottom of the thread since it had no impact on changing the original vote.

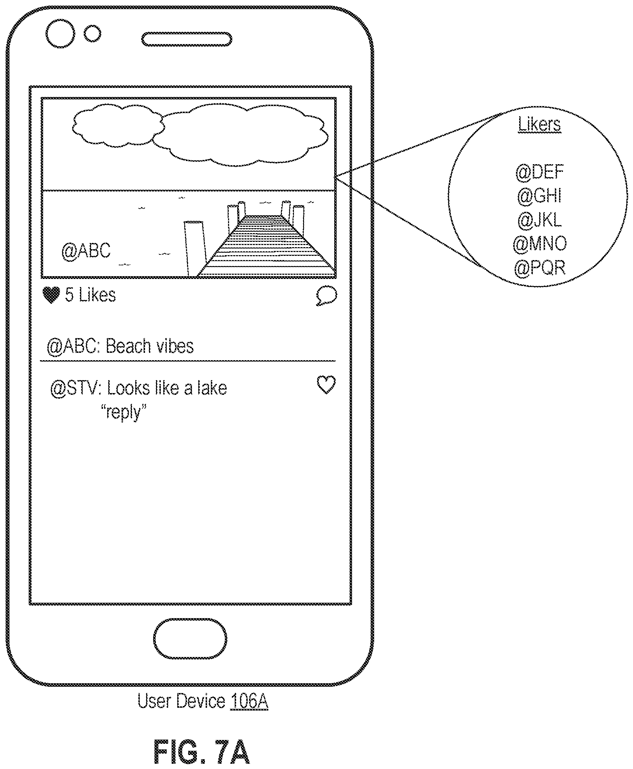

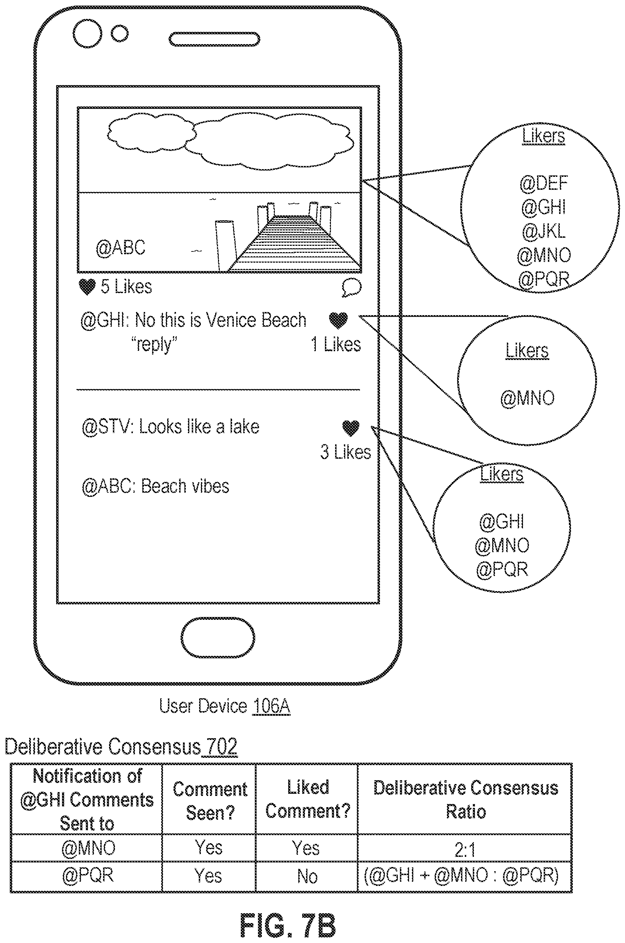

FIGS. 7A-B depict another example use case of deliberative consensus in an online social media platform. FIG. 7A depicts the photo post made by the user @ABC, as depicted and described in reference to FIG. 6A. Unlike the example in FIG. 6B, the FIG. 7B depicts an alternative updated or formatted view of the photo post thread of FIG. 7A. In comparison to the example of FIG. 6B, in the example of FIG. 7B, @GHI commented in response to @STV saying, "No this is Venice Beach." Since @GHI's comment was in response to @STV's comment, @GHI's comment can be brought to the attention of those users who liked @STV's comment: @MNO and @PQR. @MNO responded to @GHI's comment by liking it. Since @GHI's comment disagrees with @STV's comment, which was the original critical comment, @GHI's comment can be the new critical comment and can be bumped to the top of the thread. @STV's comment can therefore be moved to the bottom of the thread but still above @ABC's comment since @STV's comment has a higher criticalness score than @ABC's comment (e.g., in other words, @STV's comment had previously been a critical comment whereas @ABC's comment was not).

Moreover, the deliberative consensus in FIG. 7B can be a ratio of users who liked @STV's comment who saw @GHI's comment and responded to it over those users who liked @STV's comment, saw @GHI's comment, but did not respond to it. As shown in a deliberative consensus table 702, the deliberative consensus is 2:1: @GHI (the dissenter to @STV's comment) and @MNO (an original liker of @STV's comment who changed their vote in response to seeing @GHI's comment) against @PQR (an original liker of @STV's comment who did not respond to or change their vote in response to seeing @GHI's comment)*.* A notification of @GHI's comment was sent to @MNO and @PQR. The comment was seen by both users. @MNO liked the comment but @PQR did not respond. Therefore, the deliberative consensus ratio is 2:1. In other implementations, @GHI's comment can also be sent to @STV and @STV can be included in calculating the deliberative consensus. In yet other implementations, @GHI's comment can also be sent to users that liked the original post by @ABC.

Textual sentiment analysis can be used to determine whether @GHI's comment expresses disagreement with @STV's comment. If it does, then @GHI's comment can become the new critical comment, as described above. For example, in some social platforms, where users can only vote positively (e.g., upvote or like), users' negative votes can be inferred based on sentiment of comments that the users like. Therefore, agreeing with a dissenting reply to a post can imply disagreement with whatever is being replied to. Thus, in the example of FIG. 7B, the deliberative consensus counts @MNO, who liked @GHI's comment, as voting to disagree with @STV's comment.

As depicted in FIGS. 6-7, the photo post started with a comment. After all, for there to be a deliberative poll, there has to be some disagreement or approval (e.g., explicit via a downvote or dislike or implicit via textual sentiment analysis). In the examples of FIGS. 6-7, there was no disagreement with @ABC's original post, which was just a photo that users liked. Rather, the first disagreement was @STV's comment in response to @ABC's original post. The deliberative poll, and deliberative consensus, therefore began with @STV's comment. As another example, if user A posts an article titled "Study shows that red wine causes cancer," and three users liked the article post but user B comments, "Actually, here's a study that red wine prevents cancer," the deliberative poll, and deliberative consensus, can start as disagreement to the original article post. Textual sentiment analysis can be used to determine whether user B's comment is in disagreement with user A's post.

As depicted in FIGS. 6-7, implicit polls can exist in any forum or social network where a post or comment is liked or upvoted/downvoted. The disclosed technology can therefore be integrated into these forums or social network platforms without changing a user interface, especially where these platforms have tree-structured conversation models (posts, replies, replies to replies, etc.). An argument structure of the post can be identified, including reasons to agree or disagree, counter argument, counter-counter arguments, etc. The disclosed technology can determine whether a reply represents agreement or disagreement, or neither. For example, if a user likes/dislikes a comment then replies to it, the user's action can be inferred as a reason to agree/disagree. If a user comments without voting, various methods, techniques, and algorithms described herein can be used to infer whether the comment represents agreement/disagreement (e.g., NLP, sentiment analysis; sentiment of users who voted for it; clustering of users who generally disagree/agree, etc.).

As described herein, a critical thread can start with a comment with the most likes/votes that disagrees with an original post (even if those who disagree are the majority). The critical thread can also start with the comment with the most votes that disagrees with the majority (e.g., the comment with the most votes that supports the original post, if the majority disagreed with the original post). Refer to discussion throughout this disclosure about identifying and generating the critical comment and the critical thread.

Moreover, as described herein, explicit/stand-alone polls can integrate the disclosed technology and can include a separate website, a plugin/feature in a social network, forum software, team collaboration software, decision support system(s), DAO governance platform(s), or other governance platform(s), and/or an enhancement to existing social platforms, to create a poll feature. The disclosed technology can run "on top" of existing social networks, providing a different view of conversations or threads. For example, an application can use a TWITTER API and re-order a user's feed, pushing tweets to the top that have a high deliberative consensus. The next item in the critical thread of a discussion in which a user took a position can then take advantage of TWITTER's "so and so received a reply" feature. People tend to agree with people they follow. Therefore, this feature can draw people's attention to the strongest argument *against* the person they follow and disagree with, which can help to break down filters and provide for more informed decision making. The critical consensus calculations for each post can then be used as an independent source of trust/quality data for people or content.

In some implementations, the disclosed technology can apply to multiple choice polls. This can also allow for different Social Choice functions such as ranked (e.g., condorcet, borda count, instant runoff), quadratic, etc. A critical thread may need to be generalized as starting with a comment with most votes from someone who voted for an option that was not selected by the social choice function. If users can upvote multiple comments, then a critical comment may be a comment that gets the most votes, but then there can be ties for comments that getting first votes.

In some implementations, votes can be weighed by reputation (e.g., users with high reputation can get multiple votes). In yet other implementations, the disclosed technology can provide for different views of a same argument tree. Different views can have different calculated deliberative consensus based on different weights for participant votes. For example, weights can be based on social connections, greater weight can be given where there are more social connections, a weight can be based on a reputation score within a community (e.g., a user wants to see deliberative consensus among people in a certain REDDIT community). Weights can also be based on a "web of trust" reputation score. Sometimes, for example, the full weight of a user's vote can be weighed more heavily in a group of users if the user has a good reputation (e.g., a reputation score above a threshold value or range). On the other hand, a user's vote can be given little weight in the group if they are seen as dishonest (e.g., their reputation score is below the threshold value or range). A user can, however, gain reputation (e.g., increase their reputation score) by voting in line with other users, where those users have reputation (e.g., more reputation than the user, reputation scores that exceed the threshold value or range, etc.). For example, reputation can be rewarded based on a measure of mutual information (e.g., in bits) between a user's vote and votes of users who already have reputation. Reputation may therefore be awarded to users whose votes can be used to predict the votes of other users who have reputation.

For example, after a first user has voted, Bayes rule can be used to calculate a posterior probability of the vote of a second user who has reptitation, given the vote of the first user. A proper scoring rule, such as a logarithm of this posterior probability, can then be used to assign a score to the first user based on the vote of the second user. The use of proper scoring rules can create an incentive for the first user to vote honestly, as long as the first user believes that the second user will also vote honestly . Thus, there exists a Nash equilibrium where users seeking to maximize their reputation vote honestly because they expect other users with reputation to vote honestly. The deliberative consensus can thus reveal what a user who is exposed to all information in the critical thread would honestly believe, support, or approve of. Other refinements to the peer prediction method, such as the Bayesian Truth Serum, can be used. Furthermore, if Distributed Bayesian Reasoning is used to calculate the deliberative consensus, the deliberative consensus can further estimate what a user would honestly believe if they were exposed to all information shared by others in all critical threads, even if no single user has been exposed to all this information.

A linear growth and/or exponential decay formula can be used so that it may take more time for the user to gain reputation than to lose it. One or more other statistical and/or machine learning techniques can be used to assign reputation to users. Different views of the same argument tree can also imply different critical threads, and thus different requirements for notifications of each critical thread. Different views of the same argument tree can also supply multiple different deliberative consensus calculations, and possibly a different deliberative consensus calculation for each user or group of users. In yet other implementations, a prediction market can be added to polls. In other words, users can bet money, other currencies, or other assets on what outcome(s) may result from the polls. Moreover, in some implementations, techniques such as Peer-Prediction and Bayesian Truth Serum mechanism can be used to incentivize users to be truthful with their responses and thus encourage honest voting. Such formulas can be used to reward users with reputation based on their votes and/or comments. These formulas can allow the users to be honest with their opinions without creating a negative effect on their reputation (e.g., a lower reputation score).

In some implementations, the argument tree and votes can be a conflict-flee replicated data type (CRDT), which can allow for the disclosed technology to operate within a decentralized system. Hash of content can also be used, or a universally unique identifier (UUID), for each comment to therefore generate IDs. Each comment can reference a parent ID (e.g., parent comment that the comment is a response to). Votes can also be a last-write wins (LWW) register (e.g., one per user per comment), which is a type of CRDT. As a result, the disclosed technology to apply in a network partition. Any event, such as a new post or new vote can be sent out as an update. Each client can then subscribe to a stream of updates to store a whole tree for a conversation. Each client can then calculate a deliberative consensus and determine which users should receive the critical comment.

The systems and disclosed technology can be applied in numerous variations. For example, the disclosed technology can be seamlessly integrated into different social media platforms where users vote on and/or discuss posted content (e.g., FACEBOOK, TWITTER, TWITTER BIRDWATCH, TWITTER SPACES, INSTAGRAM, TIK TOK, ZOOM, CLUBHOUSE, TWITCH, etc.). For example, in audio social networks (e.g., TWITTER SPACES, CLUBHOUSE), users can enter and communicate in audio chat rooms. Users can speak in the chat rooms and/or listen to others speaking in the chat rooms, and may have the ability to respond to comments made by other users in any of a variety of ways (e.g., audio response, emoji reaction, textual response, motion-based response, gesture-based response, facial expression detection, eye tracking). Thus, user reactions to audio-based content can be detected, analyzed, and used to determine a deliberate consensus with regard to the propositions, statements, and/or other assertions in the audio content. For example, a deliberative consensus can be determined based on the comments and reactions in such audio chat rooms, such as identifying a main proposition audibly presented in the chat room, one or more critical comments to that main proposition, and then determining a deliberate consensus among other users who have listened to and/or otherwise viewed both the main proposition and the critical comment. Such features can be extended to other media interfaces for user interaction, such as video interfaces (e.g., video chat room), live streams (e.g., TWITCH, YOUTUBE LIVE), and/or others.

In some implementations, the disclosed technology can also be used with decision support tools and/or systems as well as governance platforms. The governance platforms can provide stakeholders or other users in an organization with the ability to vote and make decisions for the particular organization. Such voting can be considered a form of polling, which the disclosed technology can be applied. The disclosed technology can therefore be used to ensure informed and unbiased decision making in the organization. Example governance platforms can include decentralized autonomous organizations (DAOs) in environments such as Blockchain.

The disclosed technology can be used for any of a variety of purposes, such as for performing fact-checking functionality, particularly with regard to information that is spreading virally on the internet. For example, social media and other content distribution systems have used viral coefficients, which is roughly a ratio of shares/redistributions of content to impressions of the content (e.g., ratio of shares to views), to identify and promote content that is already "going viral" or is likely to "go viral"-meaning promoting content likely to be shared many times over. However, high viral coefficients are not necessarily an indication that the content is accurate or truthful, and oftentimes content that is inaccurate, false, or otherwise misleading can end up having a high viral coefficient. The disclosed technology can be applied to viral coefficient determinations to aid social media companies and other content distribution systems in differentiating between accurate/truthful viral content and misleading/false viral content. For example, one or more critical comments to the viral content (e.g., viral post, viral video, viral news link) can be identified and a group of users who have viewed both the viral content and the responsive critical comment can be identified. The viral coefficient for such a group of informed users (i.e., users who have viewed both the viral content and the critical comment(s)) can be determined and used in any of a variety of ways to distinguish between accurate/truthful viral content and misleading/false viral content. For example, the viral coefficient for the group of informed users can be compared against a viral coefficient for a broader population of users (e.g., all users) and/or a population of users who have only viewed the viral content (not also viewed the critical comment). If the viral coefficient for the group of informed users is lower than viral coefficients for other populations of users (e.g., a threshold level lower, statistically significant amount lower), then the viral content can be determined to likely be inaccurate/false, and corrective actions can be taken, such as reducing the viral coefficient for the content (e.g., reducing viral coefficient to the viral coefficient of the informed group of users), removing the viral content from the social media and/or content distribution systems, and/or taking other corrective actions to slow, stop, or otherwise mitigate the spread of the false and misleading information. However, if the viral coefficient for the group of informed users is similar to, the same as, or greater than the viral coefficient for the broader population, it can indicate that the content is truthful/accurate, which can cause social media and/or other content distribution systems to maintain (and/or increase, in some instances) the viral coefficient for the viral content. Other extensions and/or applications of the deliberative consensus to viral content are also possible. Mechanisms such as Peer Prediction and/or Bayesian Truth Serum can be used to improve a fact-checking system in promoting content that users who are informed of information in a critical thread may honestly believe to be true.

While this specification contains many specific implementation details, these should not be construed as limitations on the scope of the disclosed technology or of what may be claimed, but rather as descriptions of features that may be specific to particular embodiments of particular disclosed technologies. Certain features that are described in this specification in the context of separate embodiments can also be implemented in combination in a single embodiment in part or in whole. Conversely, various features that are described in the context of a single embodiment can also be implemented in multiple embodiments separately or in any suitable subcombination. Moreover, although features may be described herein as acting in certain combinations and/or initially claimed as such, one or more features from a claimed combination can in some cases be excised from the combination, and the claimed combination may be directed to a subcombination or variation of a subcombination. Similarly, while operations may be described in a particular order, this should not be understood as requiring that such operations be performed in the particular order or in sequential order, or that all operations be performed, to achieve desirable results. Particular embodiments of the subject matter have been described. Other embodiments are within the scope of the following claims.

## Claims

1. A method for determining deliberative consensus among a plurality of opinions expressed electronically in an online discussion, the method comprising:
receiving (302), at a computer system (102), user feedback data for at least a first group of users and a second group of users, wherein the user feedback data identifies a first opinion expressed in the online discussion by the first group of users and a second opinion expressed in the online discussion by the second group of users, wherein the first opinion and the second opinion relate to a topic, and the first opinion is different from the second opinion;
receiving, at the computer system, comment data identifying comments posted to the online discussion in response to the first opinion and the second opinion expressed in the online discussion;
identifying (306), by the computer system and based on reactions to the comments and the user feedback data, a critical comment from among the comments that support the second opinion, wherein the first opinion represents a majority view held by the first group and the second opinion represents a minority view in the online discussion held by the second group;
transmitting (310), by the computer system and to a portion of computing devices associated with users of a third group, a notification with the critical comment, wherein transmitting the notification causes the critical comment to be presented on the portion of the computing devices and for the portion of the computing devices to receive responses to the critical comment from the users of the third group;
the method being **characterized by** further comprising the steps of:
receiving (312), by the computer system and from the portion of the computing devices, indications of the responses to the notification;
determining (314), by the computer system and based on the indications of responses to the notification, a deliberative consensus opinion based, at least in part, on the responses to the notification regarding the critical comment from the portion of the computing devices associated with the users of the third group, wherein the deliberative consensus opinion is a numeric value associated with at least one of the first opinion and the second opinion for the topic; and
transmitting (316), by the computer system and to at least one of the computing devices of users in the first group, the second group, and the third group, the deliberative consensus opinion of the online discussion.

2. The method of claim 1, wherein:
the online discussion is an online forum or a social media platform,
the first opinion is expressed in relation to a post regarding the topic by the first computing devices associated with the first group of users via the online forum, wherein the first opinion is at least one of a (i) comment, (ii) up vote, (iii) like, (iv) the post, (v) a tag, (vi) a share action, (vii) a repost action, (viii) a micro-payment, and (ix) a user selection, and
the second opinion is expressed in relation to the post regarding the topic by second computing devices associated with the second group of users via the online forum, wherein the second opinion is at least one of a (i) down vote, (ii) comment, (iii) inaction, (iv) a flag, (v) a tag, and (vi) a dislike,
wherein the user feedback data is received from a computer system hosting the online discussion.

3. The method of claim 2, wherein the notification comprises at least one of (i) a message presented at a top portion of a feed provided by the online forum or the social media platform, (ii) a push notification directing the users of the third group to a mobile application provided at the portion of the computing devices, (iii) an email notification, (iv) a badge notification for the mobile application or a web application provided at the portion of the computing devices, and (v) the critical comment presented immediately below or immediately above the post in the feed provided by the online forum or the social media platform.

4. The method of claim 2, further comprising sorting, by the computer system and based on the deliberative consensus opinion, posts presented in the online forum or the social media platform to users of at least one of the first group, the second group, and the third group, wherein posts having a higher numeric value are presented above other posts having a lower numeric value in the online forum or the social media platform.

5. The method of claim 2, further comprising:
identifying, by the computer system, a subset of users from at least one of the first group, the second group, and the third group who saw viral content and the critical comment, the critical comment being responsive to the viral content;
determining, by the computer system, a first viral coefficient for the identified subset of users;
determining, by the computer system, a second viral coefficient for users from at least one of the first group, the second group, and the third group who saw the viral content but did not see the critical comment;
determining, by the computer system, whether the first viral coefficient is less than the second viral coefficient;
identifying, by the computer system and based on a determination that the first viral coefficient is less than the second viral coefficient, the viral content as containing inaccurate or false information; and
performing, by the computer system, a corrective action in response to the viral content containing inaccurate or false information,
wherein the first viral coefficient is a value associated with a first deliberative consensus opinion and the second viral coefficient is a value associated with a pre-deliberative consensus opinion.

6. The method of claim 5, wherein performing, by the computer system, the corrective action comprises lowering the second viral coefficient to a value of the first viral coefficient.

7. The method of claim 6, wherein performing, by the computer system, the corrective action comprises removing the viral content from the online discussion.

8. The method of claim 6, wherein performing, by the computer system, the corrective action comprises sorting content presented in the online discussion such that the viral content is presented below other content.

9. The method of claim 1, wherein:
the online discussion is a poll,
the first opinion is expressed in relation to the post regarding the topic as a first vote in the poll at the first computing devices associated with the first group of users, and
the second opinion is expressed in relation to the poll regarding the topic as a second vote in the poll at second computing devices associated with the second group of users.

10. The method of claim 1, further comprising selecting, by the computer system, the deliberative consensus opinion using Distributed Bayesian Reasoning and based at least in part on the at least threshold adoption of the second opinion.

11. The method of claim 1, wherein the notification includes a subset of comments in a comment thread associated with the online discussion, wherein the subset of comments support the critical comment and provide context around the critical comment.

12. The method of claim 1, further comprising:
identifying, by the computer system, a comment in disagreement with the critical comment, the critical comment being a previous critical comment; and
recursively performing, by the computer system, the receiving, the selecting, and the transmitting steps with the comment in disagreement with the previous critical comment being selected as the new critical comment, wherein
the new critical comment is the comment in disagreement with the previous critical comment,
the first opinion is in agreement with the previous critical comment, and
the second opinion is in disagreement with the previous critical comment.

13. The method of claim 1, wherein:
the online discussion is a governance platform,
the first opinion is expressed in relation to a decision to be made regarding the topic by the first computing devices associated with the first group of users via the governance platform, wherein the first opinion is at least one of (i) a comment and (ii) a vote, and
the second opinion is expressed in relation to the decision to be made regarding the topic by second computing devices associated with the second group of users via the governance platform, wherein the second opinion is at least one of (i) a comment in opposition of the first opinion, (ii) a vote in opposition of the first opinion, and (iii) an inaction.

14. The method of claim 13, wherein the governance platform is a decentralized autonomous organization (DAO).

15. A system for determining deliberative consensus among a plurality of opinions expressed electronically in an online discussion, the system comprising:
an online discussion system configured to host online discussions, wherein the online discussions include at least one of an online forum, a social media platform, and a poll;
user devices running client applications that interact with the online discussion system to present the online discussions to users of the user devices; and
a computer system in communication with the user devices, the computer system being configured to determine a deliberative consensus opinion among a plurality of opinions expressed by the users of the user devices in an online discussion hosted by the online discussion system, wherein the computer system is configured to perform operations comprising:
receiving, from the user devices, user feedback data for at least a first group of users and a second group of users, wherein the user feedback data identifies a first opinion expressed in the online discussion by the first group of users and a second opinion expressed in the online discussion by the second group of users, wherein the first opinion and the second opinion relate to a topic, and the first opinion is different from the second opinion;
receiving, from the user devices, comment data identifying comments posted to the online discussion in response to the first opinion and the second opinion expressed in the online discussion;
identifying, based on reactions to the comments and the user feedback data, a critical comment from among the comments that support the second opinion, wherein the first opinion represents a majority view held by the first group and the second opinion represents a minority view in the online discussion held by the second group;
transmitting, to a portion of user devices associated with users of a third group, a notification with the critical comment, wherein transmitting the notification causes the critical comment to be presented on the portion of the user devices and for the portion of the user devices to receive responses to the critical comment from the users of the third group;
**characterized in that** the computer system is further configured to perform operations comprising:
receiving, from the portion of the user devices, indications of the responses to the notification;
determining, based on the indications of responses to the notification, a deliberative consensus opinion based, at least in part, on the responses to the notification regarding the critical comment from the portion of the computing devices associated with the users of the third group, wherein the deliberative consensus opinion is a numeric value associated with at least one of the first opinion and the second opinion for the topic; and
transmitting, to at least one of the user devices of users in the first group, the second group, and the third group, the deliberative consensus opinion of the online discussion.

## Patentansprüche

1. Verfahren zum Bestimmen deliberativen Konsenses unter einer Vielzahl von Meinungen, die in einer Online-Diskussion elektronisch ausgedrückt wird, wobei das Verfahren Folgendes umfasst:
Empfangen (302), an einem Computersystem (102), von Benutzerrückmeldungsdaten für mindestens eine erste Gruppe von Benutzern und eine zweite Gruppe von Benutzern, wobei die Benutzerrückmeldungsdaten eine erste Meinung, die in der Online-Diskussion von der ersten Gruppe von Benutzern ausgedrückt wird, und eine zweite Meinung, die in der Online-Diskussion von der zweiten Gruppe von Benutzern ausgedrückt wird, identifizieren, wobei die erste Meinung und die zweite Meinung sich auf ein Thema beziehen und die erste Meinung sich von der zweiten Meinung unterscheidet;
Empfangen, an dem Computersystem, von Kommentardaten, die Kommentare identifizieren, die als Reaktion auf die erste und die zweite in der Online-Diskussion ausgedrückte Meinung in der Online-Diskussion gepostet werden;
Identifizieren (306), durch das Computersystem und basierend auf Reaktionen auf die Kommentare und die Benutzerrückmeldungsdaten, eines kritischen Kommentars aus den Kommentaren, die die zweite Meinung unterstützen, wobei die erste Meinung eine Mehrheitsansicht darstellt, die von der ersten Gruppe vertreten wird, und die zweite Meinung eine Minderheitsansicht in der Online-Diskussion darstellt, die von der zweiten Gruppe vertreten wird;
Übertragen (310), durch das Computersystem und an einen Teil von Rechenvorrichtungen, der Benutzern einer dritten Gruppe zugeordnet ist, einer Benachrichtigung mit dem kritischen Kommentar, wobei das Übertragen der Benachrichtigung bewirkt, dass der kritische Kommentar auf dem Teil der Rechenvorrichtungen präsentiert wird, und dass der Teil der Rechenvorrichtungen Antworten auf den kritischen Kommentar von den Benutzern der dritten Gruppe empfängt;
wobei das Verfahren **dadurch gekennzeichnet ist, dass** es ferner folgende Schritte umfasst:
Empfangen (312), durch das Computersystem und von dem Teil der Rechenvorrichtungen, von Angaben zu den Antworten auf die Benachrichtigung;
Bestimmen (314), durch das Computersystem und basierend auf den Angaben der Antworten auf die Benachrichtigung, einer deliberativen Konsensmeinung, die mindestens teilweise auf den Antworten auf die Benachrichtigung bezüglich des kritischen Kommentars von dem Teil der Rechenvorrichtungen, der den Benutzern der dritten Gruppe zugeordnet ist, basiert, wobei die deliberative Konsensmeinung ein numerischer Wert ist, der mindestens einer von der ersten Meinung und der zweiten Meinung zu dem Thema zugeordnet ist; und
Übertragen (316), durch das Computersystem und an mindestens eine der Rechenvorrichtungen von Benutzern der ersten Gruppe, der zweiten Gruppe und der dritten Gruppe, der deliberativen Konsensmeinung der Online-Diskussion.

2. Verfahren nach Anspruch 1, wobei:
die Online-Diskussion ein Online-Forum oder eine Social-Media-Plattform ist,
die erste Meinung in Bezug auf einen Beitrag zu dem Thema durch die ersten Rechenvorrichtungen, die der ersten Gruppe von Benutzern über das Online-Forum zugeordnet sind, ausgedrückt wird, wobei die erste Meinung mindestens eines von (i) einem Kommentar, (ii) einer positiven Bewertung, (iii) einem "Gefällt mir", (iv) dem Beitrag, (v) einem Tag, (vi) einer Teilen-Aktion, (vii) einer Repost-Aktion, (viii) einer Mikrozahlung und (ix) einer Benutzerauswahl ist, und
die zweite Meinung in Bezug auf den Beitrag zu dem Thema durch zweite Rechenvorrichtungen, die der zweiten Gruppe von Benutzern über das Online-Forum zugeordnet sind, ausgedrückt wird, wobei die zweite Meinung mindestens eines von (i) einer negativen Bewertung, (ii) einem Kommentar, (iii) einer Untätigkeit, (iv) einem Flag, (v) einem Tag und (vi) einem "Gefällt mir nicht" ist,
wobei die Benutzerrückmeldungsdaten von einem Computersystem empfangen werden, das die Online-Diskussion hostet.

3. Verfahren nach Anspruch 2, wobei die Benachrichtigung mindestens eines umfasst von (i) einer Nachricht, die in einem oberen Teil eines Feeds präsentiert wird, der vom Online-Forum oder der Social-Media-Plattform bereitgestellt wird, (ii) einer Push-Benachrichtigung, die die Benutzer der dritten Gruppe auf eine mobile Anwendung weiterleitet, die an dem Teil der Rechenvorrichtungen bereitgestellt ist, (iii) einer E-Mail-Benachrichtigung, (iv) einer Badge-Benachrichtigung für die mobile Anwendung oder eine Webanwendung, die an dem Teil der Rechenvorrichtungen bereitgestellt ist, und (v) dem kritischen Kommentar, der unmittelbar unter oder unmittelbar über dem Beitrag in dem Feed präsentiert wird, der von dem Online-Forum oder der Social-Media-Plattform bereitgestellt wird.

4. Verfahren nach Anspruch 2, ferner umfassend das Sortieren, durch das Computersystem und basierend auf der deliberativen Konsensmeinung, von Beiträgen, die in dem Online-Forum oder auf der Social-Media-Plattform Benutzern von mindestens einer der ersten Gruppe, der zweiten Gruppe und der dritten Gruppe präsentiert werden, wobei Beiträge, die einen höheren numerischen Wert aufweisen, oberhalb von anderen Beiträgen, die einen niedrigeren numerischen Wert aufweisen, in dem Online-Forum oder auf der Social-Media-Plattform präsentiert werden.

5. Verfahren nach Anspruch 2, ferner Folgendes umfassend:
Identifizieren, durch das Computersystem, einer Teilmenge von Benutzern aus mindestens einer von der ersten Gruppe, der zweiten Gruppe und der dritten Gruppe, die virale Inhalte und den kritischen Kommentar gesehen haben, wobei der kritische Kommentar eine Reaktion auf den viralen Inhalt darstellt;
Bestimmen, durch das Computersystem, eines ersten viralen Koeffizienten für die identifizierte Teilmenge von Benutzern;
Bestimmen, durch das Computersystem, eines zweiten viralen Koeffizienten für Benutzer aus mindestens einer von der ersten Gruppe, der zweiten Gruppe und der dritten Gruppe, die den viralen Inhalt, aber nicht den kritischen Kommentar gesehen haben;
Bestimmen, durch das Computersystem, ob der erste virale Koeffizient kleiner als der zweite virale Koeffizient ist;
Identifizieren, durch das Computersystem und basierend auf einer Bestimmung, dass der erste virale Koeffizient kleiner als der zweite virale Koeffizient ist, des viralen Inhalts als einen Inhalt, der ungenaue oder falsche Informationen enthält; und
Durchführen einer Korrekturmaßnahme, durch das Computersystem, als Reaktion darauf, dass der virale Inhalt ungenaue oder falsche Informationen enthält,
wobei der erste virale Koeffizient ein Wert ist, der einer ersten deliberativen Konsensmeinung zugeordnet ist, und der zweite virale Koeffizient ein Wert ist, der einer vor-deliberativen Konsensmeinung zugeordnet ist.

6. Verfahren nach Anspruch 5, wobei das Durchführen der Korrekturmaßnahme, durch das Computersystem, das Absenken des zweiten viralen Koeffizienten auf einen Wert des ersten viralen Koeffizienten umfasst.

7. Verfahren nach Anspruch 6, wobei das Durchführen der Korrekturmaßnahme, durch das Computersystem, das Entfernen des viralen Inhalts aus der Online-Diskussion umfasst.

8. Verfahren nach Anspruch 6, wobei das Durchführen der Korrekturmaßnahme, durch das Computersystem, das Sortieren von in der Online-Diskussion präsentierten Inhalten umfasst, sodass der virale Inhalt unterhalb von anderem Inhalt präsentiert wird.

9. Verfahren nach Anspruch 1, wobei:
die Online-Diskussion eine Umfrage ist,
die erste Meinung in Bezug auf den Beitrag zum Thema als erste Stimme in der Umfrage an den ersten Rechenvorrichtungen, die der ersten Gruppe von Benutzern zugeordnet sind, ausgedrückt wird, und
die zweite Meinung in Bezug auf die Umfrage zum Thema als zweite Stimme in der Umfrage an zweiten Rechenvorrichtungen, die der zweiten Gruppe von Benutzern zugeordnet sind, ausgedrückt wird.

10. Verfahren nach Anspruch 1, ferner umfassend das Auswählen, durch das Computersystem, der deliberativen Konsensmeinung unter Verwendung von Verteiltem Bayes'schem Denken und mindestens teilweise basierend auf mindestens der Schwellenübernahme der zweiten Meinung.

11. Verfahren nach Anspruch 1, wobei die Benachrichtigung eine Teilmenge von Kommentaren in einem der Online-Diskussion zugeordneten Kommentar-Thread einschließt, wobei die Teilmenge von Kommentaren den kritischen Kommentar unterstützt und Kontext um den kritischen Kommentar bereitstellt.

12. Verfahren nach Anspruch 1, ferner Folgendes umfassend:
Identifizieren, durch das Computersystem, eines Kommentars, der in Widerspruch zu dem kritischen Kommentar steht, wobei der kritische Kommentar ein vorheriger kritischer Kommentar ist; und
rekursives Durchführen, durch das Computersystem, der Schritte des Empfangens, Auswählens und Übertragens, wobei der Kommentar, der in Widerspruch zu dem vorherigen kritischen Kommentar steht, als neuer kritischer Kommentar ausgewählt wird, wobei
der neue kritische Kommentar der Kommentar ist, der in Widerspruch zu dem vorherigen kritischen Kommentar steht,
die erste Meinung mit dem vorherigen kritischen Kommentar übereinstimmt, und
die zweite Meinung in Widerspruch zu dem vorherigen kritischen Kommentar steht.

13. Verfahren nach Anspruch 1, wobei:
die Online-Diskussion eine Governance-Plattform ist,
die erste Meinung in Bezug auf eine Entscheidung ausgedrückt wird, die durch die ersten Rechenvorrichtungen, die der ersten Gruppe von Benutzern zugeordnet sind, über die Governance-Plattform zu dem Thema getroffen werden soll, wobei die erste Meinung mindestens eines von (i) einem Kommentar und (ii) einer Stimme ist, und
die zweite Meinung in Bezug auf die Entscheidung ausgedrückt wird, die durch zweite Rechenvorrichtungen, die der zweiten Gruppe von Benutzern zugeordnet sind, über die Governance-Plattform zu dem Thema getroffen werden soll, wobei die zweite Meinung mindestens eines von (i) einem Kommentar gegen die erste Meinung, (ii) einer Stimme gegen die erste Meinung und (iii) einer Untätigkeit ist.

14. Verfahren nach Anspruch 13, wobei die Governance-Plattform eine Dezentralisierte Autonome Organisation (DAO) ist.

15. System zum Bestimmen eines deliberativen Konsenses unter einer Vielzahl von Meinungen, die in einer Online-Diskussion elektronisch ausgedrückt wird, wobei das System Folgendes umfasst:
ein Online-Diskussionssystem, das konfiguriert ist, um Online-Diskussionen zu hosten, wobei die Online-Diskussionen mindestens eines von einem Online-Forum, einer Social-Media-Plattform und einer Umfrage einschließen;
Benutzervorrichtungen, auf denen Client-Anwendungen ausgeführt werden, die mit dem Online-Diskussionssystem interagieren, um den Benutzern der Benutzervorrichtungen die Online-Diskussionen zu präsentieren; und
ein Computersystem, das mit den Benutzervorrichtungen kommuniziert, wobei das Computersystem konfiguriert ist, um eine deliberative Konsensmeinung unter einer Vielzahl von Meinungen zu bestimmen, die von den Benutzern der Benutzervorrichtungen in einer vom Online-Diskussionssystem gehosteten Online-Diskussion ausgedrückt wird, wobei das Computersystem konfiguriert ist, um Operationen durchzuführen, Folgendes umfassend:
Empfangen, von den Benutzervorrichtungen, von Benutzerrückmeldungsdaten für mindestens eine erste Gruppe von Benutzern und eine zweite Gruppe von Benutzern, wobei die Benutzerrückmeldungsdaten eine erste Meinung, die in der Online-Diskussion von der ersten Gruppe von Benutzern ausgedrückt wird, und eine zweite Meinung, die in der Online-Diskussion von der zweiten Gruppe von Benutzern ausgedrückt wird, identifizieren, wobei die erste Meinung und die zweite Meinung sich auf ein Thema beziehen und die erste Meinung sich von der zweiten Meinung unterscheidet;
Empfangen, von den Benutzervorrichtungen, von Kommentardaten, die Kommentare identifizieren, die als Reaktion auf die erste und die zweite in der Online-Diskussion ausgedrückte Meinung in der Online-Diskussion gepostet werden;
Identifizieren, basierend auf Reaktionen auf die Kommentare und die Benutzerrückmeldungsdaten, eines kritischen Kommentars aus den Kommentaren, die die zweite Meinung unterstützen, wobei die erste Meinung eine Mehrheitsansicht darstellt, die von der ersten Gruppe vertreten wird, und die zweite Meinung eine Minderheitsansicht in der Online-Diskussion darstellt, die von der zweiten Gruppe vertreten wird;
Übertragen einer Benachrichtigung mit dem kritischen Kommentar, an einen Teil von Benutzervorrichtungen, der Benutzern einer dritten Gruppe zugeordnet ist, wobei das Übertragen der Benachrichtigung bewirkt, dass der kritische Kommentar auf dem Teil von den Benutzervorrichtungen präsentiert wird und dass der Teil der Benutzervorrichtungen Antworten auf den kritischen Kommentar von den Benutzern der dritten Gruppe empfängt;
**dadurch gekennzeichnet, dass** das Computersystem ferner konfiguriert ist, um Operationen durchzuführen, die Folgendes umfassen:
Empfangen, von dem Teil der Benutzervorrichtungen, von Angaben zu den Antworten auf die Benachrichtigung;
Bestimmen, basierend auf den Angaben zu Antworten auf die Benachrichtigung, einer deliberativen Konsensmeinung, basierend mindestens teilweise auf den Antworten auf die Benachrichtigung bezüglich des kritischen Kommentars von dem Teil der Rechenvorrichtungen, der den Benutzern der dritten Gruppe zugeordnet ist, wobei die deliberative Konsensmeinung ein numerischer Wert ist, der mindestens einer von der ersten Meinung und der zweiten Meinung zu dem Thema zugeordnet ist; und
Übertragen der deliberativen Konsensmeinung der Online-Diskussion, an mindestens eine der Benutzervorrichtungen von Benutzern der ersten Gruppe, der zweiten Gruppe und der dritten Gruppe.

## Revendications

1. Procédé pour déterminer un consensus délibératif parmi une pluralité d'opinions exprimées électroniquement dans une discussion en ligne, le procédé comprenant :
la réception (302), au niveau d'un système informatique (102), de données de retour d'informations d'utilisateurs pour au moins un premier groupe d'utilisateurs et un deuxième groupe d'utilisateurs, dans lequel les données de retour d'informations d'utilisateurs identifient une première opinion exprimée dans la discussion en ligne par le premier groupe d'utilisateurs et une deuxième opinion exprimée dans la discussion en ligne par le deuxième groupe d'utilisateurs, dans lequel la première opinion et la deuxième opinion se rapportent à un sujet, et la première opinion est différente de la deuxième opinion ;
la réception, au niveau du système informatique, de données de commentaires identifiant des commentaires publiés dans la discussion en ligne en réponse à la première opinion et à la deuxième opinion exprimée dans la discussion en ligne ;
l'identification (306), par le système informatique et sur la base de réactions aux commentaires et aux données de retour d'informations d'utilisateurs, d'un commentaire critique parmi les commentaires qui soutiennent la deuxième opinion, dans lequel la première opinion représente un avis majoritaire détenu par le premier groupe et la deuxième opinion représente un avis minoritaire dans la discussion en ligne détenu par le deuxième groupe ;
la transmission (310), par le système informatique et à une portion de dispositifs informatiques associée à des utilisateurs d'un troisième groupe, d'une notification avec le commentaire critique, dans lequel la transmission de la notification amène le commentaire critique à être présenté sur la portion des dispositifs informatiques et amène la portion des dispositifs informatiques à recevoir des réponses au commentaire critique des utilisateurs du troisième groupe ;
le procédé étant caractérisé en comprenant en outre les étapes consistant à :
recevoir (312), par le système informatique et depuis la portion des dispositifs informatiques, des indications sur les réponses à la notification ;
déterminer (314), par le système informatique et sur la base des indications des réponses à la notification, une opinion de consensus délibératif basée, au moins en partie, sur les réponses à la notification concernant le commentaire critique de la portion des dispositifs informatiques associée aux utilisateurs du troisième groupe, dans lequel l'opinion de consensus délibératif est une valeur numérique associée à au moins l'une de la première opinion et de la deuxième opinion sur le sujet ; et
transmettre (316), par le système informatique et à au moins un des dispositifs informatiques d'utilisateurs du premier groupe, du deuxième groupe et du troisième groupe, l'opinion de consensus délibératif de la discussion en ligne.

2. Procédé selon la revendication 1, dans lequel :
la discussion en ligne est un forum en ligne ou une plateforme de médias sociaux,
la première opinion est exprimée en relation avec une publication concernant le sujet par les premiers dispositifs informatiques associés au premier groupe d'utilisateurs *via* le forum en ligne, dans lequel la première opinion est au moins l'un parmi (i) un commentaire, (ii) un vote positif, (iii) un « j'aime », (iv) la publication, (v) une étiquette, (vi) une action de partage, (vii) une action de repostage, (viii) un micro-paiement, et (ix) une sélection d'utilisateur, et
la deuxième opinion est exprimée en relation avec la publication concernant le sujet par des deuxièmes dispositifs informatiques associés au deuxième groupe d'utilisateurs *via* le forum en ligne, dans lequel la deuxième opinion est au moins l'un parmi (i) un vote négatif, (ii) un commentaire, (iii) une inaction, (iv) un signalement, (v) une étiquette, et (vi) un « je n'aime pas »,
dans lequel les données de retour d'informations d'utilisateur sont reçues d'un système informatique organisant la discussion en ligne.

3. Procédé selon la revendication 2, dans lequel la notification comprend au moins l'un parmi (i) un message présenté dans une portion supérieure d'un flux fourni par le forum en ligne ou la plateforme de médias sociaux, (ii) une notification push dirigeant les utilisateurs du troisième groupe vers une application mobile fournie au niveau de la portion des dispositifs informatiques, (iii) une notification par courrier électronique, (iv) une notification par badge pour l'application mobile ou une application web fournie au niveau de la portion des dispositifs informatiques, et (v) le commentaire critique présenté immédiatement en dessous ou immédiatement au-dessus de la publication dans le flux fourni par le forum en ligne ou la plateforme de médias sociaux.

4. Procédé selon la revendication 2, comprenant en outre le tri, par le système informatique et sur la base de l'opinion de consensus délibératif, de publications présentées dans le forum en ligne ou la plateforme de médias sociaux à des utilisateurs d'au moins un parmi le premier groupe, le deuxième groupe et le troisième groupe, dans lequel des publications ayant une valeur numérique plus élevée sont présentés au-dessus d'autres publications ayant une valeur numérique plus faible dans le forum en ligne ou la plateforme de médias sociaux.

5. Procédé selon la revendication 2, comprenant en outre :
l'identification, par le système informatique, d'un sous-ensemble d'utilisateurs d'au moins l'un du premier groupe, du deuxième groupe et du troisième groupe qui ont vu du contenu viral et le commentaire critique, le commentaire critique répondant au contenu viral ;
la détermination, par le système informatique, d'un premier coefficient viral pour le sous-ensemble identifié d'utilisateurs ;
la détermination, par le système informatique, d'un deuxième coefficient viral pour des utilisateurs d'au moins l'un du premier groupe, du deuxième groupe et du troisième groupe qui ont vu le contenu viral mais n'ont pas vu le commentaire critique ;
la détermination, par le système informatique, si le premier coefficient viral est ou n'est pas inférieur au deuxième coefficient viral ;
l'identification, par le système informatique et sur la base d'une détermination que le premier coefficient viral est inférieur au deuxième coefficient viral, du contenu viral comme contenant des informations inexactes ou fausses ; et
la réalisation, par le système informatique, d'une action corrective en réponse au contenu viral contenant des informations inexactes ou fausses,
dans lequel le premier coefficient viral est une valeur associée à une première opinion de consensus délibératif et le deuxième coefficient viral est une valeur associée à une opinion de consensus pré-délibératif.

6. Procédé selon la revendication 5, dans lequel la réalisation, par le système informatique, de l'action corrective comprend l'abaissement du deuxième coefficient viral à une valeur du premier coefficient viral.

7. Procédé selon la revendication 6, dans lequel la réalisation, par le système informatique, de l'action corrective comprend la suppression du contenu viral de la discussion en ligne.

8. Procédé selon la revendication 6, dans lequel la réalisation, par le système informatique, de l'action corrective comprend le tri du contenu présenté dans la discussion en ligne de sorte que le contenu viral est présenté en dessous d'un autre contenu.

9. Procédé selon la revendication 1, dans lequel :
la discussion en ligne est un sondage,
la première opinion est exprimée en relation avec la publication concernant le sujet en tant que premier vote dans le sondage au niveau des premiers dispositifs informatiques associés au premier groupe d'utilisateurs, et
la deuxième opinion est exprimée en relation avec le sondage concernant le sujet en tant que deuxième vote dans le sondage au niveau de deuxièmes dispositifs informatiques associés au deuxième groupe d'utilisateurs.

10. Procédé selon la revendication 1, comprenant en outre la sélection, par le système informatique, de l'opinion de consensus délibératif en utilisant le raisonnement bayésien distribué et basée au moins en partie sur au moins le seuil d'adoption de la deuxième opinion.

11. Procédé selon la revendication 1, dans lequel la notification inclut un sous-ensemble de commentaires dans un fil de commentaires associé à la discussion en ligne, dans lequel le sous-ensemble de commentaires soutient le commentaire critique et fournit un contexte autour du commentaire critique.

12. Procédé selon la revendication 1, comprenant en outre :
l'identification, par le système informatique, d'un commentaire en désaccord avec le commentaire critique, le commentaire critique étant un commentaire critique précédent ; et
la réalisation récursive, par le système informatique, des étapes de réception, de sélection et de transmission, le commentaire en désaccord avec le commentaire critique précédent étant sélectionné comme nouveau commentaire critique, dans lequel
le nouveau commentaire critique est le commentaire en désaccord avec le commentaire critique précédent,
la première opinion est en accord avec le commentaire critique précédent, et
la deuxième opinion est en désaccord avec le commentaire critique précédent.

13. Procédé selon la revendication 1, dans lequel :
la discussion en ligne est une plateforme de gouvernance,
la première opinion est exprimée en relation avec une décision à prendre concernant le sujet par les premiers dispositifs informatiques associés au premier groupe d'utilisateurs *via* la plateforme de gouvernance, dans lequel la première opinion est au moins l'un parmi (i) un commentaire et (ii) un vote, et
la deuxième opinion est exprimée en relation avec la décision à prendre concernant le sujet par des deuxièmes dispositifs informatiques associés au deuxième groupe d'utilisateurs *via* la plateforme de gouvernance, dans lequel la deuxième opinion est au moins l'un parmi (i) un commentaire en opposition à la première opinion, (ii) un vote en opposition à la première opinion, et (iii) une inaction.

14. Procédé selon la revendication 13, dans lequel la plateforme de gouvernance est une organisation autonome décentralisée (DAO).

15. Système de détermination d'un consensus délibératif parmi une pluralité d'opinions exprimées électroniquement dans une discussion en ligne, le système comprenant :
un système de discussion en ligne configuré pour organiser des discussions en ligne, dans lequel les discussions en ligne incluent au moins l'un parmi un forum en ligne, une plateforme de médias sociaux et un sondage ;
des dispositifs d'utilisateur exécutant des applications client qui interagissent avec le système de discussion en ligne pour présenter les discussions en ligne aux utilisateurs des dispositifs d'utilisateur ; et
un système informatique en communication avec les dispositifs d'utilisateur, le système informatique étant configuré pour déterminer une opinion de consensus délibératif parmi une pluralité d'opinions exprimées par les utilisateurs des dispositifs d'utilisateur dans une discussion en ligne organisée par le système de discussion en ligne, dans lequel le système informatique est configuré pour réaliser des opérations comprenant :
la réception, à partir des dispositifs d'utilisateur, de données de retour d'informations d'utilisateur pour au moins un premier groupe d'utilisateurs et un deuxième groupe d'utilisateurs, dans lequel les données de retour d'informations d'utilisateur identifient une première opinion exprimée dans la discussion en ligne par le premier groupe d'utilisateurs et une deuxième opinion exprimée dans la discussion en ligne par le deuxième groupe d'utilisateurs, dans lequel la première opinion et la deuxième opinion se rapportent à un sujet, et la première opinion est différente de la deuxième opinion ;
la réception, à partir des dispositifs d'utilisateur, de données de commentaires identifiant des commentaires publiés dans la discussion en ligne en réponse à la première opinion et à la deuxième opinion exprimée dans la discussion en ligne ;
l'identification, sur la base de réactions aux commentaires et aux données de retour d'informations d'utilisateurs, d'un commentaire critique parmi les commentaires qui soutiennent la deuxième opinion, dans lequel la première opinion représente un avis majoritaire détenu par le premier groupe et la deuxième opinion représente un avis minoritaire dans la discussion en ligne détenu par le deuxième groupe ;
la transmission, à une portion de dispositifs d'utilisateur associée à des utilisateurs d'un troisième groupe, d'une notification avec le commentaire critique, dans lequel la transmission de la notification amène le commentaire critique à être présenté sur la portion des dispositifs d'utilisateur et amène la portion des dispositifs d'utilisateur à recevoir des réponses au commentaire critique des utilisateurs du troisième groupe ;
**caractérisé en ce que** le système informatique est en outre configuré pour réaliser des opérations comprenant :
la réception, à partir de la portion des dispositifs d'utilisateur, d'indications des réponses à la notification ;
la détermination, sur la base des indications de réponses à la notification, d'une opinion de consensus délibératif basée, au moins en partie, sur les réponses à la notification concernant le commentaire critique de la portion des dispositifs informatiques associée aux utilisateurs du troisième groupe, dans lequel l'opinion de consensus délibératif est une valeur numérique associée à au moins l'une de la première opinion et de la deuxième opinion sur le sujet ; et
la transmission, à au moins l'un des dispositifs d'utilisateur d'utilisateurs du premier groupe, du deuxième groupe et du troisième groupe, de l'opinion de consensus délibératif de la discussion en ligne.
